# EUROPEAN PATENT APPLICATION

(11) **EP 4 623 663 A2**
(43) Date of publication of application: **01.10.2025**
(21) Application number: 25175536.9
(22) Date of filing: 19.05.2022
(51) Int. Cl.: A01C 21/00

(54) **METHODS, SYSTEMS, APPARATUSES, AND DEVICES FOR FACILITATING MANAGING CULTIVATION OF CROPS BASED ON MONITORING THE CROPS**

(30) Priority: 19.05.2021 US 202163190622 P
(62) Divisional of application: 22727465.1
(71) Applicant: AUGMENTA AGRICULTURE TECHNOLOGIES SMPC, 14451 Neas Ionias (GR)
(72) Inventor: NIKOLAKAKIS, Alexandros-Emmanouil, 14563 Kifisia, Athens (GR); ANTONIOU, Efstathios, 11522 Ampelokipi, Athens (GR); KARAKOULA, Aikaterini, 11523 Ampelokipi, Athens (GR); VARVARELIS, Georgios, 38222 Volos (GR)
(74) Representative: Gleiss Große Schrell und Partner mbB

(57) **Abstract**

**(EN)** Disclosed herein is an apparatus for facilitating managing cultivation of crops based on monitoring the crops. Further, the apparatus comprises an apparatus body (102, 1302, 1402), cameras (104, 1304, 1404), light sensors (108, 1308, 1408), a processing unit (116, 1208, 1214, 1316, 1416, 1602), and a communication interface (112, 1312, 1412). Further, the cameras (104, 1304, 1404) generate a measurement of a crop (1004) and a field portion (1008). Further, the light sensors (108, 1308, 1408) generate an environment measurement of an environment of the apparatus. Further, the processing unit (116, 1208, 1214, 1316, 1416, 1602) analyzes the environment measurement, determines a factor affecting the measurement, and generates a calibrating factor for the cameras (104, 1304, 1404). Further, the calibrating factor facilitates compensating the affecting of the factor in the measurement. Further, the cameras (104, 1304, 1404) calibrate a camera parameter of the cameras (104, 1304, 1404) based on the calibrating factor to generate the measurement. Further, the processing unit (116, 1208, 1214, 1316, 1416, 1602) analyzes the measurement and generates a status of the crop (1004). Further, the communication interface (112, 1312, 1412) transmits the status to a device

## Description

### FIELD OF THE INVENTION

Generally, the present disclosure relates to the field of data processing. More specifically, the present disclosure relates to methods, systems, apparatuses, and devices for facilitating managing cultivation of crops based on monitoring the crops.

### BACKGROUND OF THE INVENTION

In general, remote sensing is the acquisition of information about an object or phenomenon without making physical contact with the object. Remote sensing is used in agriculture to acquire information related to the conditions, needs, and other characteristics of field elements such as plants, soil, etc. The aforementioned information may be used for, but is not limited to, estimating the condition of plants, adjusting the dosage of substances that are applied to the field, and determining the existence of plants/weeds. With today's technology, there are many different systems, methods, and devices that are utilized to achieve remote sensing. An issue with a majority of the technology involving remote sensing in the agricultural field is the inaccuracy in which they provide. There are many variables in the field of agriculture that needs to be accounted for and many lack the usage of observing the sky, sunlight, cloud, weather, etc.

Therefore, there is a need for improved methods, systems, apparatuses, and devices for facilitating managing cultivation of crops based on monitoring the crops that may overcome one or more of the above-mentioned problems and/or limitations.

### SUMMARY OF THE INVENTION

This summary is provided to introduce a selection of concepts in a simplified form, that are further described below in the Detailed Description. This summary is not intended to identify key features or essential features of the claimed subject matter. Nor is this summary intended to be used to limit the claimed subject matter's scope.

Disclosed herein is an apparatus for facilitating managing cultivation of crops based on monitoring the crops. Further, the apparatus may be configured to be mounted on at least one agricultural equipment. Further, the at least one agricultural equipment performs at least one agricultural operation on the crops. Further, the apparatus may include an apparatus body, a plurality of cameras, a plurality of light sensors, a processing unit, and a communication interface. Further, the plurality of cameras may be disposed on a front side of the apparatus body. Further, the plurality of cameras may be configured for generating at least one measurement of at least one of a crop of a plurality of crops and a field portion of a field associated with the crop based on detecting at least one first light characteristic of a light associated with at least one of the crop and the field portion. Further, the plurality of light sensors may be disposed on the apparatus body. Further, the plurality of light sensors may be configured for generating at least one environment measurement of an environment of the apparatus based on detecting at least one second light characteristic of an environment light associated with the environment. Further, the processing unit may be disposed in the apparatus body. Further, the processing unit may be communicatively coupled with the plurality of light sensors.

Further, the processing unit may be configured for analyzing the at least one environment measurement. Further, the processing unit may be configured for determining at least one factor affecting the at least one measurement of at least one of the crop and the field portion based on the analyzing of the at least one environment measurement. Further, the processing unit may be configured for generating at least one calibrating factor for the plurality of cameras based on the determining of the at least one factor. Further, the at least one calibrating factor facilitates compensating the affecting of the at least one factor in the at least one measurement. Further, the plurality of cameras may be communicatively coupled with the processing unit. Further, the plurality of cameras may be configured for calibrating at least one camera parameter of the plurality of cameras based on the at least one calibrating factor. Further, the generating of the at least one measurement of at least one of the crop and the field portion associated with the crop may be based on the calibrating. Further, the processing unit may be configured for analyzing the at least one measurement of at least one of the crop and the field portion associated with the crop. Further, the processing unit may be configured for generating a status of the crop based on the analyzing of the at least one measurement. Further, the communication interface may be communicatively coupled with the processing unit. Further, the communication interface may be configured for transmitting the status of the crop to at least one device.

Further disclosed herein is an apparatus for facilitating managing cultivation of crops based on monitoring the crops. Further, the apparatus may be configured to be mounted on at least one agricultural equipment. Further, the at least one agricultural equipment performs at least one agricultural operation on the crops. Further, the apparatus may include an apparatus body, a plurality of cameras, a plurality of light sensors, a plurality of first cameras, a processing unit, and a communication interface. Further, the plurality of cameras may be disposed on a front side of the apparatus body. Further, the plurality of cameras may be configured for generating at least one measurement of at least one of a crop of a plurality of crops and a field portion of a field associated with the crop based on detecting at least one first light characteristic of a light associated with at least one of the crop and the field portion. Further, the plurality of light sensors may be disposed on the apparatus body. Further, the plurality of light sensors may be configured for generating at least one environment measurement of an environment of the apparatus based on detecting at least one second light characteristic of an environment light associated with the environment. Further, the plurality of first cameras may be disposed on a top side of the apparatus body. Further, the plurality of first cameras may be configured for generating at least one sky measurement of the sky based on detecting at least one of a sky characteristic of the sky and a sun characteristic of the sun in the sky. Further, the processing unit may be disposed in the apparatus body. Further, the processing unit may be communicatively coupled with the plurality of light sensors and the plurality of first cameras. Further, the processing unit may be configured for analyzing the at least one environment measurement and the at least one sky measurement. Further, the processing unit may be configured for determining at least one factor affecting the at least one measurement of at least one of the crop and the field portion based on the analyzing of the at least one environment measurement and the at least one sky measurement. Further, the processing unit may be configured for generating at least one calibrating factor for the plurality of cameras based on the determining of the at least one factor. Further, the at least one calibrating factor facilitates compensating the affecting of the at least one factor in the at least one measurement. Further, the plurality of cameras may be communicatively coupled with the processing unit. Further, the plurality of cameras may be configured for calibrating at least one camera parameter of the plurality of cameras based on the at least one calibrating factor. Further, the generating of the at least one measurement of at least one of the crop and the field portion associated with the crop may be based on the calibrating. Further, the processing unit may be configured for analyzing the at least one measurement of at least one of the crop and the field portion associated with the crop. Further, the processing unit may be configured for generating a status of the crop based on the analyzing of the at least one measurement. Further, the communication interface may be communicatively coupled with the processing unit. Further, the communication interface may be configured for transmitting the status of the crop to at least one device.

Further disclosed herein is an apparatus for facilitating managing cultivation of crops based on monitoring the crops. Further, the apparatus may be configured to be mounted on at least one agricultural equipment. Further, the at least one agricultural equipment performs at least one agricultural operation on the crops. Further, the apparatus may include an apparatus body, a plurality of cameras, a plurality of light sensors, a plurality of first cameras, at least one environmental sensor, a processing unit, and a communication interface. Further, the plurality of cameras may be disposed on a front side of the apparatus body. Further, the plurality of cameras may be configured for generating at least one measurement of at least one of a crop of a plurality of crops and a field portion of a field associated with the crop based on detecting at least one first light characteristic of a light associated with at least one of the crop and the field portion. Further, the plurality of light sensors may be disposed on the apparatus body. Further, the plurality of light sensors may be configured for generating at least one environment measurement of an environment of the apparatus based on detecting at least one second light characteristic of an environment light associated with the environment. Further, the plurality of first cameras may be disposed on a top side of the apparatus body. Further, the plurality of first cameras may be configured for generating at least one sky measurement of the sky based on detecting at least one of a sky characteristic of the sky and a sun characteristic of the sun in the sky. Further, the at least one environmental sensor may be disposed on the apparatus body. Further, the at least one environmental sensor may be configured for generating at least one first environmental measurement based on detecting at least one environmental condition of the environment. Further, the processing unit may be disposed in the apparatus body. Further, the processing unit may be communicatively coupled with the plurality of light sensors, the plurality of first cameras, and the at least one environmental sensor. Further, the processing unit may be configured for analyzing the at least one environment measurement, the at least one sky measurement, and the at least one first environmental measurement. Further, the processing unit may be configured for determining at least one factor affecting the at least one measurement of at least one of the crop and the field portion based on the analyzing of the at least one environment measurement, the at least one sky measurement, and the at least one first environmental measurement. Further, the processing unit may be configured for generating at least one calibrating factor for the plurality of cameras based on the determining of the at least one factor. Further, the at least one calibrating factor facilitates compensating the affecting of the at least one factor in the at least one measurement. Further, the plurality of cameras may be communicatively coupled with the processing unit. Further, the plurality of cameras may be configured for calibrating at least one camera parameter of the plurality of cameras based on the at least one calibrating factor. Further, the generating of the at least one measurement of at least one of the crop and the field portion associated with the crop may be based on the calibrating. Further, the processing unit may be configured for analyzing the at least one measurement of at least one of the crop and the field portion associated with the crop. Further, the processing unit may be configured for generating a status of the crop based on the analyzing of the at least one measurement. Further, the communication interface may be communicatively coupled with the processing unit. Further, the communication interface may be configured for transmitting the status of the crop to at least one device.

Both the foregoing summary and the following detailed description provide examples and are explanatory only. Accordingly, the foregoing summary and the following detailed description should not be considered to be restrictive. Further, features or variations may be provided in addition to those set forth herein. For example, embodiments may be directed to various feature combinations and subcombinations described in the detailed description.

### BRIEF DESCRIPTION OF THE DRAWINGS

The accompanying drawings, which are incorporated in and constitute a part of this disclosure, illustrate various embodiments of the present disclosure. The drawings contain representations of various trademarks and copyrights owned by the Applicants. In addition, the drawings may contain other marks owned by third parties and are being used for illustrative purposes only. All rights to various trademarks and copyrights represented herein, except those belonging to their respective owners, are vested in and the property of the applicants. The applicants retain and reserve all rights in their trademarks and copyrights included herein, and grant permission to reproduce the material only in connection with reproduction of the granted patent and for no other purpose.

Furthermore, the drawings may contain text or captions that may explain certain embodiments of the present disclosure. This text is included for illustrative, non-limiting, explanatory purposes of certain embodiments detailed in the present disclosure.
FIG. 1 is a front view of an apparatus for facilitating managing cultivation of crops based on monitoring the crops, in accordance with some embodiments.
FIG. 2 is a front view of the apparatus, in accordance with some embodiments.
FIG. 3 is a front view of the apparatus, in accordance with some embodiments.
FIG. 4 is a front view of the apparatus, in accordance with some embodiments.
FIG. 5 is a front view of the apparatus, in accordance with some embodiments.
FIG. 6 is a front view of the apparatus, in accordance with some embodiments.
FIG. 7 is a front view of the apparatus, in accordance with some embodiments.
FIG. 8 is a side view of the apparatus, in accordance with some embodiments.
FIG. 9 is a top view of the apparatus, in accordance with some embodiments.
FIG. 10 is a side view of the apparatus mounted on the at least one agricultural equipment, in accordance with some embodiments.
FIG. 11 is a side view of the apparatus mounted on the at least one agricultural equipment, in accordance with some embodiments.
FIG. 12 is a block diagram of a system for facilitating managing cultivation of crops based on monitoring the crops, in accordance with some embodiments.
FIG. 13 is a front view of an apparatus for facilitating managing cultivation of crops based on monitoring the crops, in accordance with some embodiments.
FIG. 14 is a front view of an apparatus for facilitating managing cultivation of crops based on monitoring the crops, in accordance with some embodiments.
FIG. 15 is an illustration of an online platform consistent with various embodiments of the present disclosure.
FIG. 16 is a block diagram of a computing device for implementing the methods disclosed herein, in accordance with some embodiments.

### DETAIL DESCRIPTIONS OF THE INVENTION

As a preliminary matter, it will readily be understood by one having ordinary skill in the relevant art that the present disclosure has broad utility and application. As should be understood, any embodiment may incorporate only one or a plurality of the above-disclosed aspects of the disclosure and may further incorporate only one or a plurality of the above-disclosed features. Furthermore, any embodiment discussed and identified as being "preferred" is considered to be part of a best mode contemplated for carrying out the embodiments of the present disclosure. Other embodiments also may be discussed for additional illustrative purposes in providing a full and enabling disclosure. Moreover, many embodiments, such as adaptations, variations, modifications, and equivalent arrangements, will be implicitly disclosed by the embodiments described herein and fall within the scope of the present disclosure.

Accordingly, while embodiments are described herein in detail in relation to one or more embodiments, it is to be understood that this disclosure is illustrative and exemplary of the present disclosure, and are made merely for the purposes of providing a full and enabling disclosure. The detailed disclosure herein of one or more embodiments is not intended, nor is to be construed, to limit the scope of patent protection afforded in any claim of a patent issuing here from, which scope is to be defined by the claims and the equivalents thereof. It is not intended that the scope of patent protection be defined by reading into any claim limitation found herein and/or issuing here from that does not explicitly appear in the claim itself.

Thus, for example, any sequence(s) and/or temporal order of steps of various processes or methods that are described herein are illustrative and not restrictive. Accordingly, it should be understood that, although steps of various processes or methods may be shown and described as being in a sequence or temporal order, the steps of any such processes or methods are not limited to being carried out in any particular sequence or order, absent an indication otherwise. Indeed, the steps in such processes or methods generally may be carried out in various different sequences and orders while still falling within the scope of the present disclosure. Accordingly, it is intended that the scope of patent protection is to be defined by the issued claim(s) rather than the description set forth herein.

Additionally, it is important to note that each term used herein refers to that which an ordinary artisan would understand such term to mean based on the contextual use of such term herein. To the extent that the meaning of a term used herein - as understood by the ordinary artisan based on the contextual use of such term - differs in any way from any particular dictionary definition of such term, it is intended that the meaning of the term as understood by the ordinary artisan should prevail.

Furthermore, it is important to note that, as used herein, "a" and "an" each generally denotes "at least one," but does not exclude a plurality unless the contextual use dictates otherwise. When used herein to join a list of items, "or" denotes "at least one of the items," but does not exclude a plurality of items of the list. Finally, when used herein to join a list of items, "and" denotes "all of the items of the list."

The following detailed description refers to the accompanying drawings. Wherever possible, the same reference numbers are used in the drawings and the following description to refer to the same or similar elements. While many embodiments of the disclosure may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the disclosure. Instead, the proper scope of the disclosure is defined by the claims found herein and/or issuing here from. The present disclosure contains headers. It should be understood that these headers are used as references and are not to be construed as limiting upon the subjected matter disclosed under the header.

The present disclosure includes many aspects and features. Moreover, while many aspects and features relate to, and are described in the context of methods, systems, apparatuses, and devices for facilitating managing cultivation of crops based on monitoring the crops, embodiments of the present disclosure are not limited to use only in this context.

In general, the method disclosed herein may be performed by one or more computing devices. For example, in some embodiments, the method may be performed by a server computer in communication with one or more client devices over a communication network such as, for example, the Internet. In some other embodiments, the method may be performed by one or more of at least one server computer, at least one client device, at least one network device, at least one sensor, and at least one actuator. Examples of the one or more client devices and/or the server computer may include, a desktop computer, a laptop computer, a tablet computer, a personal digital assistant, a portable electronic device, a wearable computer, a smart phone, an Internet of Things (IoT) device, a smart electrical appliance, a video game console, a rack server, a super-computer, a mainframe computer, mini-computer, micro-computer, a storage server, an application server (e.g., a mail server, a web server, a real-time communication server, an FTP server, a virtual server, a proxy server, a DNS server, etc.), a quantum computer, and so on. Further, one or more client devices and/or the server computer may be configured for executing a software application such as, for example, but not limited to, an operating system (e.g., Windows, Mac OS, Unix, Linux, Android, etc.) in order to provide a user interface (e.g., GUI, touch-screen based interface, voice based interface, gesture based interface, etc.) for use by the one or more users and/or a network interface for communicating with other devices over a communication network. Accordingly, the server computer may include a processing device configured for performing data processing tasks such as, for example, but not limited to, analyzing, identifying, determining, generating, transforming, calculating, computing, compressing, decompressing, encrypting, decrypting, scrambling, splitting, merging, interpolating, extrapolating, redacting, anonymizing, encoding and decoding. Further, the server computer may include a communication device configured for communicating with one or more external devices. The one or more external devices may include, for example, but are not limited to, a client device, a third party database, a public database, a private database, and so on. Further, the communication device may be configured for communicating with the one or more external devices over one or more communication channels. Further, the one or more communication channels may include a wireless communication channel and/or a wired communication channel. Accordingly, the communication device may be configured for performing one or more of transmitting and receiving of information in electronic form. Further, the server computer may include a storage device configured for performing data storage and/or data retrieval operations. In general, the storage device may be configured for providing reliable storage of digital information. Accordingly, in some embodiments, the storage device may be based on technologies such as, but not limited to, data compression, data backup, data redundancy, deduplication, error correction, data finger-printing, role based access control, and so on.

Further, one or more steps of the method disclosed herein may be initiated, maintained, controlled, and/or terminated based on a control input received from one or more devices operated by one or more users such as, for example, but not limited to, an end user, an admin, a service provider, a service consumer, an agent, a broker and a representative thereof. Further, the user as defined herein may refer to a human, an animal or an artificially intelligent being in any state of existence, unless stated otherwise, elsewhere in the present disclosure. Further, in some embodiments, the one or more users may be required to successfully perform authentication in order for the control input to be effective. In general, a user of the one or more users may perform authentication based on the possession of a secret human readable secret data (e.g., username, password, passphrase, **PIN,** secret question, secret answer etc.) and/or possession of a machine readable secret data (e.g., encryption key, decryption key, bar codes, etc.) and/or or possession of one or more embodied characteristics unique to the user (e.g., biometric variables such as, but not limited to, fingerprint, palm- print, voice characteristics, behavioral characteristics, facial features, iris pattern, heart rate variability, evoked potentials, brain waves, and so on) and/or possession of a unique device (e.g., a device with a unique physical and/or chemical and/or biological characteristic, a hardware device with a unique serial number, a network device with a unique IP/MAC address, a telephone with a unique phone number, a smartcard with an authentication token stored thereupon, etc.). Accordingly, the one or more steps of the method may include communicating (e.g., transmitting and/or receiving) with one or more sensor devices and/or one or more actuators in order to perform authentication. For example, the one or more steps may include receiving, using the communication device, the secret human readable data from an input device such as, for example, a keyboard, a keypad, a touch-screen, a microphone, a camera, and so on. Likewise, the one or more steps may include receiving, using the communication device, the one or more embodied characteristics from one or more biometric sensors.

Further, one or more steps of the method may be automatically initiated, maintained, and/or terminated based on one or more predefined conditions. In an instance, the one or more predefined conditions may be based on one or more contextual variables. In general, the one or more contextual variables may represent a condition relevant to the performance of the one or more steps of the method. The one or more contextual variables may include, for example, but are not limited to, location, time, identity of a user associated with a device (e.g., the server computer, a client device, etc.) corresponding to the performance of the one or more steps, environmental variables (e.g., temperature, humidity, pressure, wind speed, lighting, sound, etc.) associated with a device corresponding to the performance of the one or more steps, physical state and/or physiological state and/or psychological state of the user, physical state (e.g., motion, direction of motion, orientation, speed, velocity, acceleration, trajectory, etc.) of the device corresponding to the performance of the one or more steps and/or semantic content of data associated with the one or more users. Accordingly, the one or more steps may include communicating with one or more sensors and/or one or more actuators associated with the one or more contextual variables. For example, the one or more sensors may include, but are not limited to, a timing device (e.g., a real-time clock), a location sensor (e.g., a GPS receiver, a GLONASS receiver, an indoor location sensor, etc.), a biometric sensor (e.g., a fingerprint sensor), an environmental variable sensor (e.g., temperature sensor, humidity sensor, pressure sensor, etc.) and a device state sensor (e.g., a power sensor, a voltage/current sensor, a switch-state sensor, a usage sensor, etc. associated with the device corresponding to performance of the or more steps).

Further, the one or more steps of the method may be performed one or more number of times. Additionally, the one or more steps may be performed in any order other than as exemplarily disclosed herein, unless explicitly stated otherwise, elsewhere in the present disclosure. Further, two or more steps of the one or more steps may, in some embodiments, be simultaneously performed, at least in part. Further, in some embodiments, there may be one or more time gaps between performance of any two steps of the one or more steps.

Further, in some embodiments, the one or more predefined conditions may be specified by the one or more users. Accordingly, the one or more steps may include receiving, using the communication device, the one or more predefined conditions from one or more devices operated by the one or more users. Further, the one or more predefined conditions may be stored in the storage device. Alternatively, and/or additionally, in some embodiments, the one or more predefined conditions may be automatically determined, using the processing device, based on historical data corresponding to performance of the one or more steps. For example, the historical data may be collected, using the storage device, from a plurality of instances of performance of the method. Such historical data may include performance actions (e.g., initiating, maintaining, interrupting, terminating, etc.) of the one or more steps and/or the one or more contextual variables associated therewith. Further, machine learning may be performed on the historical data in order to determine the one or more predefined conditions. For instance, machine learning on the historical data may determine a correlation between one or more contextual variables and performance of the one or more steps of the method. Accordingly, the one or more predefined conditions may be generated, using the processing device, based on the correlation.

Further, one or more steps of the method may be performed at one or more spatial locations. For instance, the method may be performed by a plurality of devices interconnected through a communication network. Accordingly, in an example, one or more steps of the method may be performed by a server computer. Similarly, one or more steps of the method may be performed by a client computer. Likewise, one or more steps of the method may be performed by an intermediate entity such as, for example, a proxy server. For instance, one or more steps of the method may be performed in a distributed fashion across the plurality of devices in order to meet one or more objectives. For example, one objective may be to provide load balancing between two or more devices. Another objective may be to restrict a location of one or more of an input data, an output data, and any intermediate data therebetween corresponding to one or more steps of the method. For example, in a client-server environment, sensitive data corresponding to a user may not be allowed to be transmitted to the server computer. Accordingly, one or more steps of the method operating on the sensitive data and/or a derivative thereof may be performed at the client device.

### Overview

The present disclosure describes methods, systems, apparatuses, and devices for facilitating managing cultivation of crops based on monitoring the crops.

Further, the present disclosure describes a device with the ability to compensate for all environmental factors using information acquired from a sky-facing camera and a light intensity sensor. Further, the device uses a sensor system that is proceeded by one or more processing units by means of a proprietary algorithm, image/video processing, machine vision, machine learning, and neural-network processing. Further, the device includes a multispectral camera-based crop-monitoring system that is mounted on agricultural equipment. Further, the device may calculate index(es) related to field elements including, but not limited to, plant condition and stress level indexes in real-time.

Further, the present disclosure focuses on close-range remote sensing for use in agriculture, specifically for sensors mounted on agricultural machinery. The information acquisition is achieved by calculating the amount of light that a field element absorbs at each of the light frequencies/wavelengths measured. The amount of light that is absorbed by a field element is derived from the reflectance of the field element, which in turn is calculated from the comparison of the light that is radiated from the field element and captured by the multispectral camera system against the amount of light that the field element receives which is estimated or measured.

Further, the present disclosure describes a device that is designed to operate only with the use of sunlight on agricultural land. As the environmental light conditions always vary, the sensor output is constantly calibrated using a novel approach to calculating compensation factors and settings for the camera sensing system. The system calculates the exact environmental conditions by processing images or video from a wide angle, sky-facing camera system, light intensity in certain wavelengths using dedicated sky-facing sensors (such as the light intensity sensor), as well as other sensors like humidity sensors. The system then calculates the compensation factors and settings of the front facing camera system, using proprietary algorithms, machine learning, artificial intelligence, or neural networks.

Further, the present disclosure describes a device with the ability to compensate for all environmental factors using information acquired from a sky-facing camera. The device is mounted on an agricultural vehicle such as a tractor or a self-propelled sprayer. More specifically, the device mounted on a vehicle can have the functionality of applying substances to a crop field or any other crops grown on agricultural land. The device includes a field monitoring system that uses two or more front-facing cameras with bandpass optical filters to measure the reflection ratio of the plants, or other field elements, in two or more wavelengths; thus, making the device a multispectral camera-based system. The device comprises a plurality of cameras. Further, the number of cameras may differ.

Further, the present disclosure describes a device that is mounted on an agricultural vehicle that can have the functionality of applying substance(s) to a crop field or any other crop is grown on agricultural land. The device further comprises a wide-angle camera sensing system, a sky-facing wide-angle camera sensing system, a plurality of environmental sensors, and one or more processing systems.

The wide-angle camera sensing system of two or more cameras is facing forward at a small angle with respect to the horizon. In normal operation, the sensing system is directed towards the field elements. The aforementioned camera system integrates two or more cameras with optical bandpass filters. The camera system is equipped with wide angle lenses that allow the use of a single system to cover a working width of more than twenty meters. The system does not have a light source but measures the Sun's radiated light that is reflected on field elements with the use of the system of cameras.

The sky-facing wide-angle camera sensing system further comprises one or more cameras. The sky-facing sensing system is capable of measuring the light intensity in one or more wavelength regions.

The plurality of environmental sensors are utilized to observe, measure, and take account of the surroundings of the device. The plurality of environmental sensors can include sensors that are able to measure humidity and temperature.

The present disclosure describes a method, procedure, or system that processes a set of inputs and produces a defined set of outputs. The processing unit(s) include, but are not limited to, the use of a proprietary algorithm, machine learning, artificial intelligence, machine vision, image processing, or neural networks. The processing systems are able to estimate and calculate the listed parameters: the Sun's location in the sky, the direction of sunlight in relation to the device and the direction in which the agricultural vehicle is moving, sun elevation angle, cloud analysis, atmosphere humidity and fog, rainfall detection, atmospheric conditions, and detailed environmental assessments.

Further, the device determines the reflectance for each wavelength region with higher accuracy compared to existing solutions due to the aforementioned reasons. Therefore, the device can be used to perform many agricultural oriented operations with higher efficiency and improved accuracy.

The device can be used to create accurate visual representations of the condition, need, and other characteristics of the field elements. The visual representations can be considered maps which can be used in multiple farming applications to take informed decisions. The device is able to adjust the dosage of any substance(s) applied on the field for each different area of field elements, either by creating a substance prescription or by setting a different dosage in real-time. Substances include, but are not limited to, fertilizers, pesticides, fungicides, growth regulators, harvest aids, etc. In addition, the device is able to adjust the driving trajectory of an agricultural vehicle by determining areas of interest.

Further, the present disclosure describes a mounted device on top of agricultural machinery which uses a multispectral camera-based sensing system to assess the status of the plants in the field in real-time. The information needed for analyzing the canopy of a crop field or any other element found in agricultural land (e.g., other tractors, people, trees, flooded areas, etc.) is the amount of light that is absorbed by a canopy or a field element in different wavelengths. The forementioned method is achieved by knowing and measuring the amount of light that the field element receives, against the measurement of light that a field element radiates, reflects, and emits. In order to calculate the reflectivity of field elements, there are a couple of details that are to be considered.

The first consideration is the measurement of the light that a field element radiates that can be achieved, at a certain center wavelength, by using a camera. In order to have a large field of view, the camera(s) have to be equipped with a wide lens and face forward or sideways instead of only downwards.

The next consideration is the amount of light that a field element actually receives which is much more difficult to measure; the machinery on which the sensor system is mounted moves in the field during operation. Therefore, the amount of light the field element receives must be estimated based on the measurements that are acquired on the moving agricultural equipment. The system is installed in such a way that the upper surface of the system is parallel to the ground surface on which the agricultural equipment with a similar operation like a self-propelled sprayer is parked. Crop fields have small changes in inclination within an area of fewer than fifty meters, so within that area, an assumption can be made that the top surface of the sensor is parallel to the field ahead of the tractor. The sunlight rays are considered parallel to each other, and since the device's top surface is parallel to the agricultural field, the light/radiation received and measured on the device has the same characteristics as the light/radiation received by the field in the area close to which the device is located.

The last consideration is the relative position of the Sun with respect to the agricultural equipment which can greatly affect the reflected light that is radiated towards the agricultural equipment indirectly. The reasons for the difference are the reflection angle, the existence, and density of shadows created by sunlight, and the radiation that passes through the plant rather than being reflected by the plant surface to reach the camera sensor.

The device uses two or more forward facing cameras that measure radiated light. The cameras can be equipped with two or more bandpass optical filters to measure radiated light in specific wavelengths. The camera sensors are able to measure light-intensity from a specific region within the field of view of the sensor, that corresponds to a specific location from which the light is emitted. Since the characteristics of the device, sensing element, and height at which it is installed are known, the location of the reflective surface and the angle which it is reflecting light from can be calculated.

The device uses two or more sky-facing light sensors that measure the intensity of light in two or more specific wavelengths. The wavelength center frequencies are the same or close to the bandpass center frequency of the optical filters that are integrated into the front facing cameras. The sensors measure the environmental light intensity in order to quantify the intensity of light that is received by the field elements in these specific wavelength bands.

In addition, the device uses one or more wide-angle, sky-facing cameras that are interfaced with a processing unit. The images or video captured from the sky-facing camera(s) are processed by means of image/video processing, machine vision, machine learning, and neural-network processing in order to determine the following: the sun's location in the sky, the direction of sunlight in relation to the heading which the agricultural equipment is moving, sun elevation, cloud analysis, atmosphere humidity and fog, rainfall detection, atmospheric conditions such as sunrise and sunset, and detailed environmental assessment such as distinguishing between heavy clouds or sunset when the intensity of sunlight is the same in terms of value.

The device's main processing unit uses the measurements from the light intensity sensors in each center wavelength and combines them with the Sun's and environmental characteristics, in order to constantly auto-calibrate the front facing cameras. The auto calibration factors are determined by the aforementioned inputs using a proprietary algorithm that can involve machine learning, artificial intelligence, and any type of neural network.

The auto-calibration camera factors and settings allow for the cameras to provide measurements for one or more regions of the field elements within the field of view of the cameras, that are compensated for any change in environmental conditions, including factors that are associated with the sun's location, such as shadows and light that passes through plants.

The compensation factors that are provided to the camera system are calculated as such so that if a specific area of interest, an area that always represents the same location in a field, is captured by the cameras. The resulting measurement for that specific area will stay within the level of accuracy of the device regardless of the environmental conditions at that specific time.

The measurements acquired from the cameras are processed to produce an index that can represent, but is not limited to, the plants' condition and stress level. The measurements acquired are compensated for environmental changes which means that the calculated indexes depend only on the actual state of the field elements and they are independent of any changes in the environment. Changes in the environment include but are not limited to, the direction of movement of the agricultural equipment, sun position, and intensity, direction of sunlight in relation to the heading towards which the agricultural equipment is moving, sun elevation angle, cloud existence/form/density, rainfall, humidity or fog, and sunrise/sunset.

Further, the present disclosure describes a device with the ability to compensate for all environmental factors using information acquired from a sky-facing camera and sensor system that is processed by one or more processing units by means of a proprietary algorithm, image/video processing, machine vision, machine learning, neural-network processing. The compensation is done by constantly changing calibration factors and settings of the front facing cameras that are responsible for measuring the radiated light from a specific area in the field, in front or sideways of the agricultural equipment that the device is mounted on. The measurements from the front-facing cameras are used to calculate unbiased index(es) related to field elements, including plants' condition and stress level indexes. The calculation of this index(es) is done in real-time and during agricultural equipment operations and can be used in adjusting the dosage of substances applied in the field as the concurrent or a subsequent operation takes place.

The device determines the reflectance for each wavelength region with higher accuracy compared to existing solutions due to the aforementioned reasons. Therefore, the device can be used to perform many agricultural oriented operations.

The device utilizes a front-facing multispectral camera system compared to standard cameras, to gather information about the field elements. The device utilizes a wide-angle camera system so that it can cover a field of view of more than twenty meters with the use of a single device, compared to systems that include a light source and therefore need multiple devices to cover this field of view.

The device utilizes inputs from a novel sky-facing camera system and dedicated wavelength light sensors to calculate compensation factors and settings of the front or sideways facing camera system, in order to acquire images that are unbiased from environmental conditions and other factors like shadows. The calculation of the calibration factors and settings can be done with the use of proprietary algorithms, machine learning, artificial intelligence, machine vision, image processing, or neural networks. The aforementioned images from the front-facing cameras are used to calculate unbiased index(es) related to field elements, including but not limited to plants' conditions and stress levels. The calculation of these unbiased, accurate index(es) is done in real-time and during agricultural equipment operations and can be used in adjusting the dosage of substances applied in the field as the concurrent or a subsequent operation takes place, with higher accuracy compared to existing methods without a light source.

Further, the present disclosure describes a system that has the following characteristics. The system uses a wide-angle, sky-facing camera system and a processing unit to determine the environmental conditions at the time of each light measurement using methods that include, but are not limited to, image/video processing, machine vision, machine learning, or neural-networks. The environmental conditions that are determined can include, but are not limited to, the direction of sunlight in relation to the presented device, directional movement of the agricultural equipment/vehicle, sun elevation, cloud analysis, atmosphere humidity, and fog, rainfall detention, atmospheric conditions, and detailed environmental assessment. The light intensity of the environment is measured in multiple wavelengths by using dedicated sky facing sensors. Furthermore, other sensors like humidity or temperature are used to gather environmental information. The aforementioned information and measurements are used to auto-calibrate the compensation factors and settings of the front-facing multispectral camera system, for each wavelength. The images or videos acquired are unbiased from the environmental conditions and are used to determine the reflectance of the field elements in each wavelength, which is then used to calculate unbiased index(es) related to field elements, including plants' condition and stress level indexes.

Further, the present disclosure relates to agricultural devices. More specifically, the present disclosure describes an auto-calibrated, multispectral camera-based system for field monitoring.

Further, the present disclosure describes a method to improve the performance of a camera-based agricultural sensor.

Further, the present disclosure describes a multispectral-camera based field monitoring system that auto-calibrates using environmental information acquired by the use of a sensing system that includes a sky facing camera.

Further, the present disclosure describes an auto-calibrated, multispectral-camera-based system for field monitoring.

Further, the present disclosure describes a multispectral-camera-based, crop monitoring system that is mounted on agricultural equipment and can calculate index(es) related to field elements, including but not limited to plant condition and stress level indexes, in real time. The system does not have a light source but measures the Sun's radiated light that is reflected on crop field elements with the use of two or more cameras with bandpass optical filters. The multispectral-camera-based, crop - monitoring system comprises an ability to compensate for all environmental factors using information acquired from a sky-facing camera and sensor system that is processed by one or more processing units by means of a proprietary algorithm, image/video processing, machine vision, machine learning, neural-network processing. The compensation is done by constantly changing calibration factors and settings of the front-facing cameras that are responsible for measuring the radiated light from a specific area in the field, within the field of view of the camera system. The measurements from the front-facing cameras are used to calculate unbiased index(es) related to field elements, including plant health and stress level indexes. The calculation of this index (es) is done in real-time and during agricultural equipment operations and can be used in adjusting the dosage of substances applied in the field as the concurrent or a subsequent operation takes place.

Further, the present disclosure describes remote sensing. Further, remote sensing in general is the acquisition of information about an object or phenomenon without making physical contact with the object. This present disclosure focuses on close-range remote sensing for use in agriculture, specifically for sensors mounted on agricultural machinery. Remote sensing is used in agriculture to acquire information related to the condition, needs, and other characteristics of field elements (plants, soil, etc). This information may be used for (but not limited to) estimating the health of plants in the field, adjusting the dosage of substances (fertilizers, pesticides, etc) that are applied on the field, and determining the existence of plants or weeds. The information acquisition is achieved by calculating the amount of light that a field element absorbs at each of the light frequencies (wavelengths) measured. The amount of light that is absorbed by a field element is derived from the reflectance of the field element, which in turn is calculated from the comparison of the light that is radiated from the field element (and captured by the multispectral camera system) against the amount of light that the field element receives which is estimated or measured. In order to calculate the reflection ratio of the field elements, the measured radiation level must either be compared against the radiation level of a known light source or an environmental measured light source.

Further, the present disclosure describes a device that is mounted on a tractor or an agricultural vehicle (more specifically vehicles that can have the functionality of applying chemical (or any other) substances to a crop field or any other crops grown on agricultural land). Further, the present disclosure describes a field monitoring system, which uses 2 or more front-facing cameras with bandpass optical filters to measure the reflection ratio of the plants, or other field elements, in two or more wavelengths; thus making the device a multispectral-camera-based system It is designed to operate only with the use of sunlight in agricultural land. As the environmental light conditions always vary, the sensor output is constantly calibrated using a novel approach to calculating compensation factors and settings for the camera sensing system. The system calculates the exact environmental conditions by processing images or video from a wide angle, sky-facing camera system, light intensity in certain wavelengths using dedicated sky-facing sensors, as well as other sensors like humidity sensor. It then calculates the compensation factors and settings of the front facing camera system, using proprietary algorithms, machine learning, artificial intelligence, or neural networks.

More specifically, it does not only measure the sunlight intensity by using a light intensity sensor but also:
- Determines the direction of sunlight in relation to the presented device, which is mounted on the agricultural machinery, by processing the images acquired from the sky facing camera.
- Determines the detailed condition of the surrounding environment (clear, cloudy, light clouds, heavy overcast, rainfall, etc) by processing the images acquired from the sky facing camera
- Measures the light intensity at multiple wavelengths using dedicated sensors
- Measures the input of other sensors like humidity and temperature

Using the acquired information, the system can fully characterize the Sun as a radiation (light) source. This information allows for improved auto -calibration performance when using the Sun as a reference light source in order to determine the reflectivity (for one or more wavelengths) of elements in the field. Furthermore, the relative locations of the sun, the system, and the inspected field elements are factored in to determine a measurement unbiased from the environmental conditions. The system uses this information in order to calculate the reflectance ratio of the field elements in multiple wavelength regions.

Further, the present disclosure describes a system that has the following characteristics:
1. The system uses a wide-angle, sky-facing camera system and a processing unit to determine the environmental conditions at the time of each light measurement using methods that include but are not limited to image/video processing, machine vision, machine learning, or neural networks. The environmental conditions that are determined can include -but are not limited to the following:
   - The direction of sunlight in relation to the presented device, which is mounted on the agricultural machinery, by processing the images acquired from the sky facing camera.
   - In relation to the heading in which the agricultural equipment is moving
   - Sun elevation
   - Cloud analysis (cloud presence, form, density, etc)
   - Atmosphere humidity & fog
   - Rainfall detection
   - Atmospheric conditions (sunrise & sunset)
   - Detailed environmental assessment (for example distinguishing between heavy clouds or sunset when the intensity of sunlight is the same in terms of value)
2. Light intensity of the environment is measured in multiple wavelengths by using dedicated sky facing sensors. Furthermore, other sensors like humidity or temperature are used to gather environmental information.
3. The aforementioned information and measurements are used to constantly and automatically calibrate the compensation factors and settings of the front-facing multispectral camera system, for each wavelength. The images or videos acquired are unbiased from the environmental conditions and are used to determine the reflectance of the field elements in each wavelength, which is then used to calculate unbiased index(es) related to field elements, including plants' condition and stress level indexes.

Further, the present disclosure describes utilizing a front-facing multispectral camera system compared to standard cameras, to gather information about the field elements.

Further, the present disclosure describes utilizing a wide-angle camera system so that it can cover a field of view of more than 20m with the use of a single device, compared to systems that include a light source and therefore need multiple devices to cover this field of view.

Further, the present disclosure describes utilizing inputs from a novel sky-facing camera system and dedicated wavelength light sensors to calculate compensation factors and settings of the front facing camera system, in order to acquire images that are unbiased from environmental conditions and other factors like shadows. The calculation of the calibration factors and settings can be done with the use of proprietary algorithms, machine learning, artificial intelligence, machine vision, image processing, or neural networks). Further, the aforementioned images from the front-facing cameras are used to calculate unbiased index(es) related to field elements, including but not limited to plants' conditions and stress levels. Further, the calculation of these unbiased, accurate index(es) is done in real-time and during agricultural equipment operations, and can be used in adjusting the dosage of substances applied in the field as the concurrent or a subsequent operation takes place, with higher accuracy compared to existing methods without a light source.

Further, the present disclosure describes a physical device mounted on top of agricultural machinery that uses a multispectral-camera-based sensing system to assess the status of the plants in the field in real-time. As mentioned, the information needed for analyzing the elements of a crop field or any other crops grown on agricultural land is the amount of light that is absorbed by a field element in different wavelengths. This is calculated by knowing or measuring the amount of light that the field element receives, against the measurement of light that a field element radiates (reflects and emits). In order to calculate the reflectivity of field elements, the following should be considered:
1. Measurement of the light that a field element radiates can be achieved, at a certain center wavelength, by using a camera (CMOS or other). In order to have a large field of view (20m or more), the camera(s) have to be equipped with a wide lens and face forward or sideways (possibly under a small angle) instead of only downwards.
2. The amount of light that a field element actually receives is much more difficult to measure; the machinery on which the sensor system is mounted moves in the field during operation. Therefore, the amount of light the field element receives must be estimated based on the measurements that are acquired on the moving agricultural equipment. In order to do this, the system is installed in such a way that the upper surface of the system is parallel to the ground surface on which the tractor (or any other agricultural equipment with a similar operation like a self-propelled sprayer) is parked. Crop fields have small changes in inclination within an area of less than 50m, so within that area, we can assume that the top surface of the sensor is parallel to the field ahead of the tractor. The sunlight rays are considered parallel to each other, and since the device's top surface is parallel to the agricultural field, we can conclude that the light (radiation) received and measured on the device has the same characteristics as the light (radiation) received by the field in the area close to which the device is located.
3. The relative position of the Sun with respect to the agricultural equipment greatly affects the reflected light that is radiated towards the agricultural equipment, and the device that measures it, which is mounted on the equipment. The reasons for this difference are the reflection angle, the existence, and density of shadows created by sunlight, and the radiation that passes through the plant rather than being reflected by the plant surface to reach the camera sensor.

Further, the disclosed device comprises the following characteristics:
1. It uses forward facing cameras (2 or more) that measure radiated light. The cameras can be equipped with two or more bandpass optical filters to measure radiated light in specific wavelengths. These camera sensors can measure light-intensity from a specific region within the field of view of the sensor, that corresponds to a specific location from which the light is emitted. Since the characteristics of the device and sensing element, as well as the height at which it is installed, is known, the location of the reflective surface and the angle which it is reflecting light from, can be calculated.
2. It uses two or more sky-facing light sensors that measure the intensity of light in two or more specific wavelengths. The wavelength center frequencies are the same or close to the bandpass center frequency of the optical filters that are integrated into the front-facing cameras. The sensors measure the environmental light intensity in order to quantify the intensity of light that is received by the field elements in these specific wavelength bands.
3. It uses one or more wide-angle, sky-facing cameras that are interfaced with a processing unit. The images or video captured from the sky-facing camera(s) are processed by means of image/video processing, machine vision, machine learning, and neural-network processing in order to determine the following:
   a. Sun's location in the sky
   b. Direction of sunlight in relation to the heading in which the agricultural equipment is moving
   c. Sun elevation
   d. Cloud analysis (cloud presence, form, density, etc)
   e. Atmosphere humidity & fog
   f. Rainfall detection
   g. Atmospheric conditions (sunrise & sunset)
   h. Detailed environmental assessment (e.g., distinguishing between heavy clouds or sunset when the intensity of sunlight is the same in terms of value)
4. The device's main processing unit uses the measurements from the light intensity sensors in each center wavelength and combines them with the Sun's and environmental characteristics, in order to constantly auto-calibrate the front facing cameras. The auto-calibration factors are determined by the aforementioned inputs using a proprietary algorithm that can involve machine learning, artificial intelligence, and any type of neural network.
5. The auto-calibration camera factors and settings allow for the cameras to provide measurements for one or more regions of the field elements within the field of view of the cameras, that are compensated for any change in environmental conditions, including factors that are associated with the sun's location, such as shadows and light that passes through plants.
6. The compensation factors that are provided to the camera system are calculated as such so that if a specific area of interest (an area that always represents the same location in a field) is captured by the cameras, the resulting measurement for that specific area will stay within the level of accuracy of the device, regardless of the environmental conditions in that specific time.
7. The measurements acquired from the cameras are processed to produce an index that can represent (but is not limited to) the plants' condition and stress level. Due to the fact that the measurements acquired are compensated for environmental changes, this means that the calculated indexes depend only on the actual state of the field elements and they are independent of any changes in the environment, including (but not limited to):
   a. Direction of movement of the agricultural equipment
   b. Sun position and intensity
   c. Direction of sunlight in relation to the heading towards which the agricultural equipment is moving
   d. Sun elevation angle
   e. Clout existence, form, or density
   f. Rainfall
   g. Humidity or fog
   h. Sunrise or sunset
8. The produced index can be used in calculating and adjusting the dosage of substances applied in the field as the concurrent or a subsequent operation takes place.

Further, the disclosed device comprises an ability to compensate for all environmental factors using information acquired from a sky-facing camera and sensor system that is processed by one or more processing units by means of a proprietary algorithm, image/video processing, and machine vision, machine learning, neural-network processing. The compensation is done by constantly changing calibration factors and settings of the front- facing cameras that are responsible for measuring the radiated light from a specific area in the field, in front of the agricultural equipment that the device is mounted on. The measurements from the front-facing cameras are used to calculate unbiased index(es) related to field elements, including plants' condition and stress level indexes. The calculation of this index(es) is done in real-time and during agricultural equipment operations and can be used in adjusting the dosage of substances applied in the field as the concurrent or a subsequent operation takes place.

Further, the disclosed device determines the reflectance for each wavelength region with higher accuracy compared to existing solutions due to the aforementioned reasons. Therefore, the disclosed device can be used to perform many agricultural oriented operations including the following, with higher efficiency and improved accuracy:
- Creating accurate visual representations of the condition, need, and other characteristics of the field elements. These maps can be used in multiple farming applications to take informed decisions.
- Adjusting the dosage of fertilizer substance (solid or liquid) applied on the field, for each different area of the field elements, either by creating a fertilization prescription or by setting a different dosage in real-time
- Adjusting the dosage of pesticide substance applied on the field, for each different area of the field elements, either by creating an application prescription or by setting a different dosage in real-time
- Adjusting the dosage of fungicide substance applied on the field, for each different area of the field elements, either by creating an application prescription or by setting a different dosage in real-time
- Adjusting the dosage of growth regulator substances applied on the field, for each different area of the field elements, either by creating an application prescription or by setting a different dosage in real-time
- Adjusting the dosage of harvest aid substance applied on the field, for each different area of the field elements, either by creating an application prescription or by setting a different dosage in real-time
- Adjusting the dosage of any other substance(s) applied on the field, for each different area of the field elements, either by creating an application prescription or by setting a different dosage in real-time
- Adjusting the driving trajectory of a farming vehicle by determining areas of interest

Further, the present disclosure describes a device including the following components:
a) A device that is mounted on a tractor or an agricultural vehicle (more specifically vehicles that can have the functionality of applying chemical (or any other) substances to a crop field or any other crop grown on agricultural land).
b) A wide angle camera sensing system (2 or more cameras) that is facing forward under a small angle with the horizon. In normal operation, this sensing system is directed towards the field elements.
c) The camera system of (1b) integrates two or more cameras with optical bandpass filters.
d) The camera system of (1b) is equipped with wide angle lenses that allow the use of a single system to cover a working width of more than 20m.
e) The system does not have a light source but measures the Sun's radiated light that is reflected on field elements with the use of cameras of (1b).
f) A sky-facing wide-angle camera sensing system (one or more cameras).
g) A sky-facing sensing system that is capable of measuring the light intensity in one or more wavelength regions
h) Other environmental sensors (for example humidity and temperature).
i) One or more processing systems that are connected to the sky facing sensing system, the front camera sensing system, as well as the light intensity sensing system.
j) A connection used in communication and interfacing of the present disclosure to the agricultural equipment, with the purpose of adjusting parameters related to an agricultural operation, such as dosage of substances applied in the field, as the concurrent or a subsequent operation takes place.

Further, the present disclosure describes a method of using inputs from (1d) and (1e), which are then processed by (1i) with the use of proprietary algorithms, machine learning, artificial intelligence, machine vision, image processing, or neural networks that are executed in a local processing system to estimate or calculate the following list of parameters:
a) Sun's location in the sky
b) The direction of sunlight in relation to the disclosed system and the direction in which the agricultural equipment is moving towards
c) Sun elevation angle
d) Cloud analysis (cloud presence, form, density, etc)
e) Atmosphere humidity & fog
f) Rainfall detection
g) Atmospheric conditions (sunrise & sunset)
h) Detailed environmental assessment (for example distinguishing between heavy clouds or sunset when the intensity of sunlight is the same in terms of value)

Further, the present disclosure describes a method of utilizing the measurements from (2) and (1e) which are then processed by (1i) in order to calculate the front-facing camera calibration factors and settings automatically, so that any change in environmental conditions, as well as factors that are associated with the sun's location, such as shadows and light that passes through plants, are compensated in the resulting image (or a portion of the image). The processing of the information from (2) and (1e) is achieved by the use of proprietary algorithms, machine learning, artificial intelligence, machine vision, image processing, or neural networks that are executed by (1i).

Further, the present disclosure describes the acquisition of images/video (or a specific part of the images/videos) from the front-facing cameras using calibration factors from (3) that are unbiased by any change in environmental conditions, including conditions that are associated with the sun's location, such as shadows and light that passes through plants.

Further, the Unbiased images from (4) with the use of proprietary algorithms, machine learning, artificial intelligence, machine vision, image processing, or neural networks that are run on (1i) determine unbiased index(es) related to field elements, including (but not limiting to) plant condition and stress level indexes.

Further, the indexes from (5) can be used to suggest, create or alter in real-time the dosage of applied substances in the field by the agricultural equipment.

Further, the indexes from (5) can be used to generate an index, prescription, and application maps of the field.

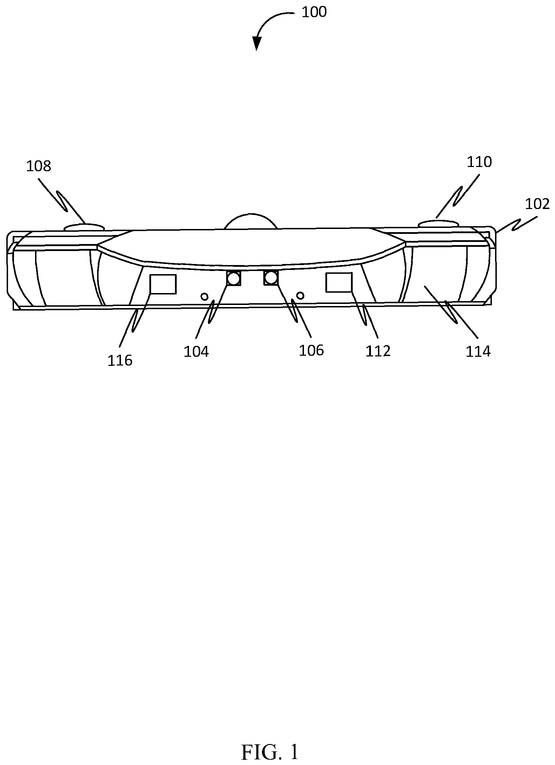

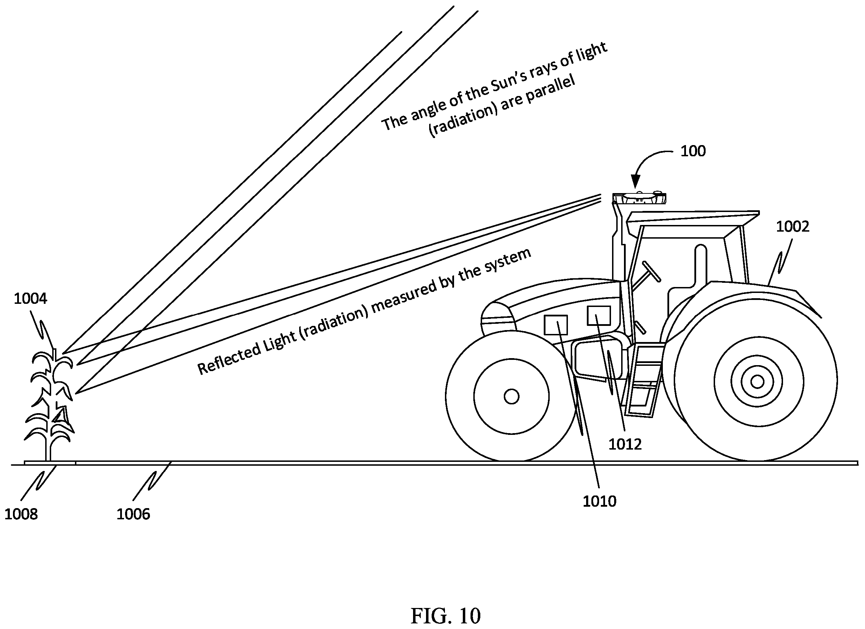

FIG. 1 is a front view of an apparatus 100 for facilitating managing cultivation of crops based on monitoring the crops, in accordance with some embodiments. Further, the apparatus 100 may be a device. Further, the crops may be plants, trees, etc. Further, the apparatus 100 may be configured to be mounted on at least one agricultural equipment 1002, as shown in FIG. 10. Further, the at least one agricultural equipment 1002 may include a farming equipment, a farming vehicle, a tractor, etc. Further, the at least one agricultural equipment 1002 performs at least one agricultural operation on the crops. Further, the at least one agricultural operation may include harvesting, sowing, tilling, fertilizing, etc. Further, the apparatus 100 may include an apparatus body 102, a plurality of cameras 104-106, a plurality of light sensors 108-110, a processing unit 116, and a communication interface 112.

Further, the plurality of cameras 104-106 may be disposed on a front side 114 of the apparatus body 102. Further, the plurality of cameras 104-106 may be configured for generating at least one measurement of at least one of a crop 1004, as shown in FIG. 10, of a plurality of crops and a field portion 1008 of a field 1006, as shown in FIG. 10, associated with the crop 1004 based on detecting at least one first light characteristic of a light associated with at least one of the crop 1004 and the field portion 1008. Further, the plurality of cameras 104-106 may include wide angle cameras. Further, the plurality of cameras 104-106 may include CMOS sensors. Further, the at least one first light characteristic may include an intensity, a frequency, a polarization, etc. Further, the light associated with at least one of the crop 1004 and the field portion 1008 may include a light reflected from at least one of the crop 1004 and the field portion 1008. Further, the field portion 1008 may include soil, etc. Further, the apparatus 100 may be parallel to a surface of the field 1006. Further, the at least one measurement may include at least one image of at least one of the crop 1004 and the field portion 1008. Further, the at least one image may include a 2D image, a 3D image, etc.

Further, the plurality of light sensors 108-110 may be disposed on the apparatus body 102. Further, the plurality of light sensors 108-110 may be configured for generating at least one environment measurement of an environment of the apparatus 100 based on detecting at least one second light characteristic of an environment light associated with the environment. Further, the plurality of light sensors 108-110 may include wide angle cameras. Further, the plurality of light sensors 108-110 may include CMOS sensors. Further, the at least one second light characteristic may include an intensity, a frequency, a polarization, etc. Further, the environment light associated with the environment may include an ambient light in the environment. Further, the at least one environment measurement may include at least one image of the environment. Further, the at least one image may include a 2D image, a 3D image, etc. Further, the plurality of light sensors 108-110 may be sky-facing wide-cameras.

Further, the processing unit 116 may be disposed in the apparatus body 102. Further, the processing unit 116 may be communicatively coupled with the plurality of light sensors 108-110. Further, the processing unit 116 may be configured for analyzing the at least one environment measurement. Further, the analyzing of the at least one environment measurement may include analyzing the at least one environment measurement using proprietary algorithms, machine learning, artificial intelligence, machine vision, image processing, neural networks, etc. Further, the processing unit 116 may be configured for determining at least one factor affecting the at least one measurement of at least one of the crop 1004 and the field portion 1008 based on the analyzing of the at least one environment measurement. Further, the at least one factor may include a detailed environmental assessment (for example distinguishing between heavy clouds or sunset when the intensity of sunlight is the same in terms of value). Further, the processing unit 116 may be configured for generating at least one calibrating factor for the plurality of cameras 104-106 based on the determining of the at least one factor. Further, the at least one calibrating factor facilitates compensating the affecting of the at least one factor in the at least one measurement. Further, the plurality of cameras 104-106 may be communicatively coupled with the processing unit 116. Further, the plurality of cameras 104-106 may be configured for calibrating at least one camera parameter of the plurality of cameras 104-106 based on the at least one calibrating factor. Further, the at least one camera parameter may correspond to at least one camera setting of the plurality of cameras 104-106. Further, the at least one camera parameter may include focal length, aperture, field-of-view, resolution, exposure, shutter speed, brightness, contrast, color saturation, image stabilization, ISO, etc. Further, the generating of the at least one measurement of at least one of the crop 1004 and the field portion 1008 associated with the crop 1004 may be based on the calibrating. Further, the processing unit 116 may be configured for analyzing the at least one measurement of at least one of the crop 1004 and the field portion 1008 associated with the crop 1004. Further, the processing unit 116 may be configured for generating a status of the crop 1004 based on the analyzing of the at least one measurement. Further, the status of the crop 1004 corresponds to a condition of the crop 1004 and the field portion 1008.

Further, the communication interface 112 may be communicatively coupled with the processing unit 116. Further, the communication interface 112 may be configured for transmitting the status of the crop 1004 to at least one device. Further, the at least one device may include an output device, a computing device, etc.

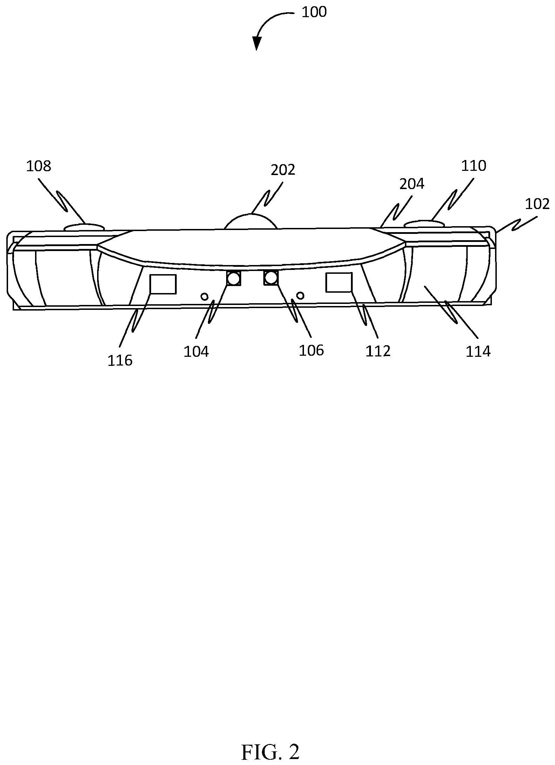

In further embodiments, the apparatus 100 may include a plurality of first cameras disposed 202 on a top side 204 of the apparatus body 102, as shown in FIG. 2. Further, the plurality of first cameras 202 may be configured for generating at least one sky measurement of the sky based on detecting at least one of a sky characteristic of the sky and a sun characteristic of the sun in the sky. Further, the sky characteristic may include a cloud cover, a type of cloud, a visibility, etc. Further, the sun characteristic may include a position of the sun, a sunlight of the sun, etc. Further, the processing unit 116 may be communicatively coupled with the plurality of first cameras 202. Further, the processing unit 116 may be configured for analyzing the at least one sky measurement. Further, the determining of the at least one factor may be based on the analyzing of the at least one sky measurement. Further, the at least one factor may include a sun's elevation, an angle of sunlight, an intensity of sunlight, a cloud's analysis (cloud presence, form, density, etc), etc. Further, the at least one sky measurement may include at least one image of the sky. Further, the at least one image may include a 2D image, a 3D image, etc. Further, the plurality of first cameras 202 may be sky-facing wide-cameras.

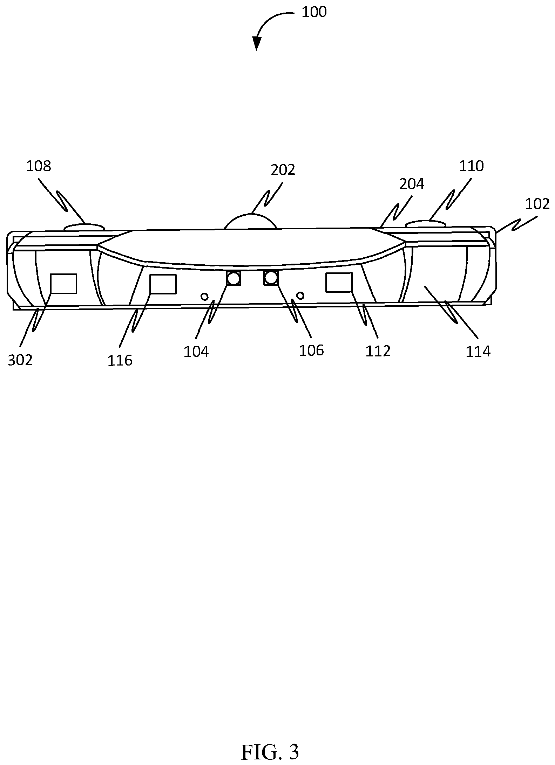

In further embodiments, the apparatus 100 may include at least one environmental sensor 302, as shown in FIG. 3, disposed on the apparatus body 102. Further, the at least one environmental sensor 302 may be configured for generating at least one first environmental measurement based on detecting at least one environmental condition of the environment. Further, the at least one environmental sensor 302 may include a temperature sensor, a pressure sensor, a precipitation sensor, a humidity sensor, etc. Further, the at least one environmental condition may include a temperature, a pressure, a precipitation, a humidity, etc. Further, the processing unit 116 may be communicatively coupled with the at least one environmental sensor 302. Further, the processing unit 116 may be configured for analyzing the at least one first environmental measurement. Further, the determining of the at least one factor may be further based on the analyzing of the at least one first environmental measurement. Further, the at least one factor may include atmosphere humidity, fog, rainfall, etc.

Further, in some embodiments, the analyzing of the at least one environment measurement may include analyzing the at least one environment measurement using at least one machine learning model. Further, the determining of the at least one factor may be based on the analyzing of the at least one environment measurement using the at least one machine learning model.

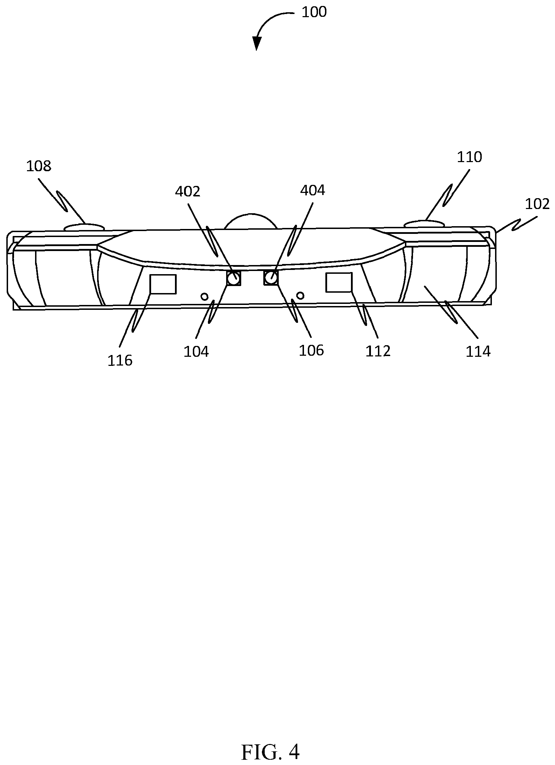

Further, in some embodiments, the plurality of cameras 104-106 may include a plurality of bandpass filters 402-404, as shown in FIG. 4. Further, the detecting of the at least one first light characteristic of the light associated with at least one of the crop 1004 and the field portion 1008 may include detecting the at least one first light characteristic of the light associated with at least one of the crop 1004 and the field portion 1008 in at least one light wavelength band based on the plurality of bandpass filters 402-404. Further, the generating of the at least one measurement may be based on the detecting of the at least one first light characteristic of the light associated with at least one of the crop 1004 and the field portion 1008 in the at least one light wavelength band based on the plurality of bandpass filters 402-404.

Further, in an embodiment, the detecting of the at least one second light characteristic of the environment light may include detecting the at least one second light characteristic of the environment light in a plurality of light wavelength bands. Further, the generating of the at least one environment measurement of the environment may be based on detecting the at least one second light characteristic of the environment light in a plurality of light wavelength bands. Further, a plurality of wavelength center frequencies of the plurality of light wavelength bands corresponds to a plurality of bandpass center frequencies of the plurality of bandpass filters 402-404.

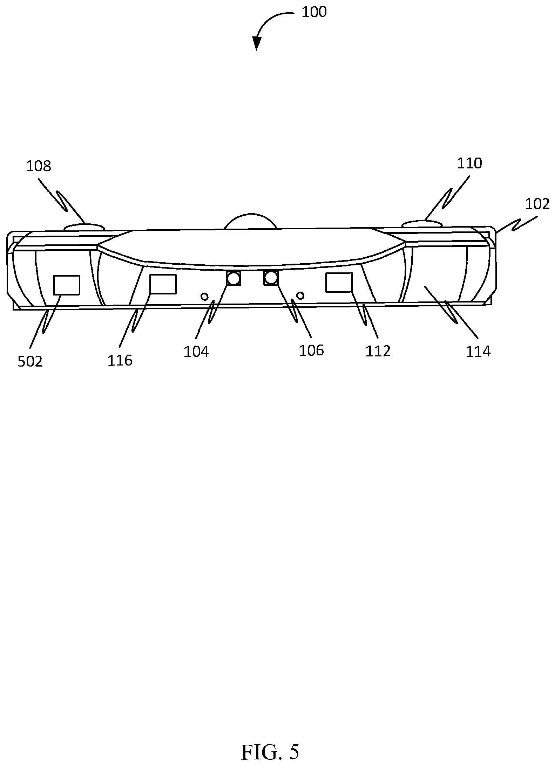

In further embodiments, the apparatus 100 may include at least one sensor 502, as shown in FIG. 5, disposed on the apparatus body 102. Further, the at least one sensor 502 may be configured for generating at least one sensor data based on detecting at least one characteristic of the apparatus 100. Further, the processing unit 116 may be communicatively coupled with the at least one sensor 502. Further, the processing unit 116 may be configured for analyzing the at least one sensor data. Further, the determining of the at least one factor may be based on the analyzing of the at least one sensor data. Further, the at least one characteristic may include an elevation of the apparatus 100 in relation to the surface of the field 1006, an inclination of the apparatus 100 in relation to the surface of the field 1006, a direction and speed of movement of the apparatus 100, etc. Further, the at least one factor may include a direction of sunlight in relation to the apparatus, a direction of the apparatus 100 in relation to the heading in which the at least one agricultural equipment 1002 may be moving, etc.

Further, in some embodiments, the processing unit 116 may be configured for analyzing the status of the crop 1004. Further, the processing unit 116 may be configured for calculating at least one index related to at least one of the crop 1004 and the field portion 1008 based on the analyzing of the status of the crop 1004. Further, the at least one index corresponds to a condition and a stress level of at least one of the crop 1004 and the field portion 1008. Further, the processing unit 116 may be configured for generating a dosage of at least one substance for the crop 1004 corresponding to a time based on the at least one index. Further, the communication interface 112 may be further configured for transmitting the dosage of the at least one substance to the at least one device. Further, the at least one substance may include fertilizer, growth regulator substance, pesticide, fungicide, harvest aid substance, etc.

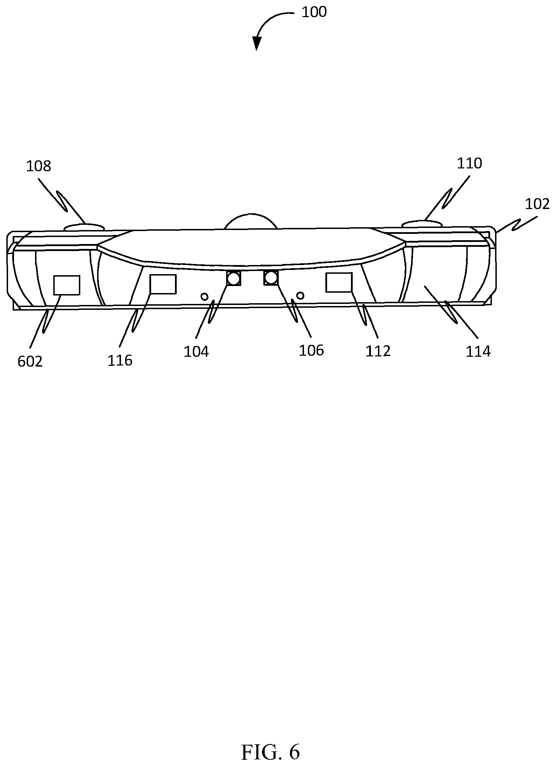

In further embodiments, the apparatus 100 may include at least one actuator 602, as shown in FIG. 6, disposed in the apparatus body 102. Further, the at least one actuator 602 may be configured to be operationally coupled with a substance dispensing mechanism 1012, as shown in FIG. 10, of the at least one agricultural equipment 1002. Further, the at least one actuator 602 may be communicatively coupled with the processing unit 116. Further, the processing unit 116 may be further configured for generating at least one command for dispensing the dosage of the at least one substance at the time based on the generating of the dosage. Further, the at least one actuator 602 may be configured for actuating the substance dispensing mechanism 1012 based on the at least one command. Further, the substance dispensing mechanism 1012 dispenses the dosage of the at least one substance at the time based on the actuating.

Further, in some embodiments, the processing unit 116 may be configured for analyzing the status of the crop 1004. Further, the processing unit 116 may be configured for determining at least one characteristic of at least one of the crop 1004 and the field portion 1008 based on the analyzing of the status. Further, the processing unit 116 may be configured for generating a visual representation of the at least one characteristic for at least one of the crop 1004 and the field portion 1008 based on the determining of the at least one characteristic. Further, the communication interface 112 may be configured for transmitting the visual representation to the at least one device.

Further, in some embodiments, the processing unit 116 may be configured for analyzing the status of the crop 1004. Further, the processing unit 116 may be configured for determining at least one area of interest in the field 1006 based on the analyzing of the status of the crop 1004. Further, the processing unit 116 may be configured for generating a driving trajectory of the at least one agricultural equipment 1002 in the field 1006 based on the determining of the at least one area of interest. Further, the communication interface 112 may be configured for transmitting the driving trajectory to the at least one device.

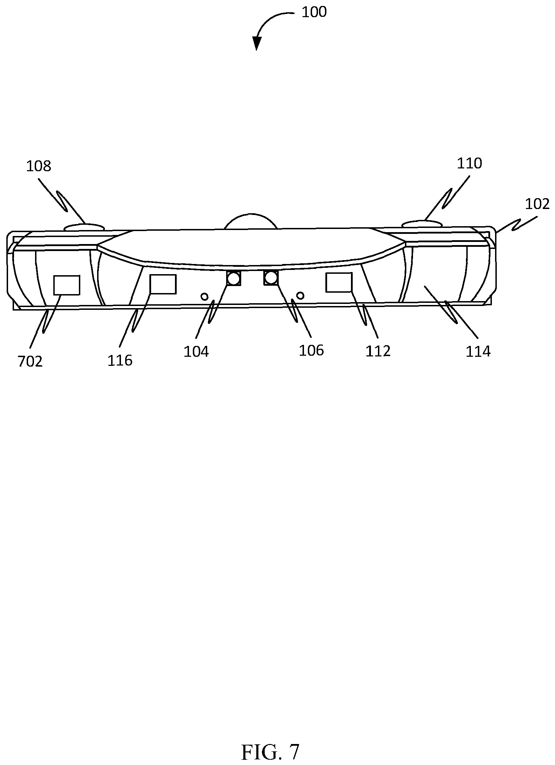

In further embodiments, the apparatus 100 may include at least one vehicle actuator 702, as shown in FIG. 7, disposed in the apparatus body 102. Further, the at least one vehicle actuator 702 may be configured to be operationally coupled with a driving mechanism 1010, as shown in FIG. 10, of the at least one agricultural equipment 1002. Further, the at least one vehicle actuator 702 may be communicatively coupled with the processing unit 116. Further, the processing unit 116 may be configured for generating at least one driving command based on the driving trajectory. Further, the at least one vehicle actuator 702 may be configured for actuating the driving mechanism 1010 based on the at least one driving command. Further, the driving mechanism 1010 drives the at least one agricultural equipment 1002 in the driving trajectory based on the actuating.

FIG. 2 is a front view of the apparatus 100, in accordance with some embodiments.

FIG. 3 is a front view of the apparatus 100, in accordance with some embodiments.

FIG. 4 is a front view of the apparatus 100, in accordance with some embodiments.

FIG. 5 is a front view of the apparatus 100, in accordance with some embodiments.

FIG. 6 is a front view of the apparatus 100, in accordance with some embodiments.

FIG. 7 is a front view of the apparatus 100, in accordance with some embodiments.

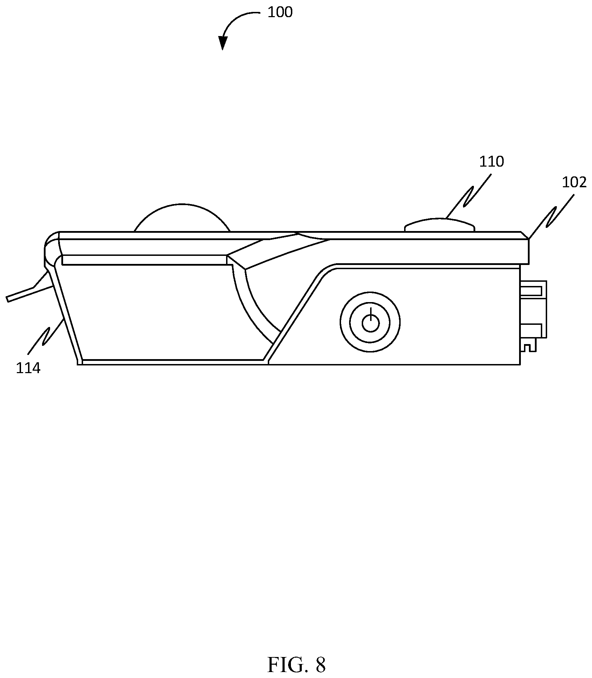

FIG. 8 is a side view of the apparatus 100, in accordance with some embodiments.

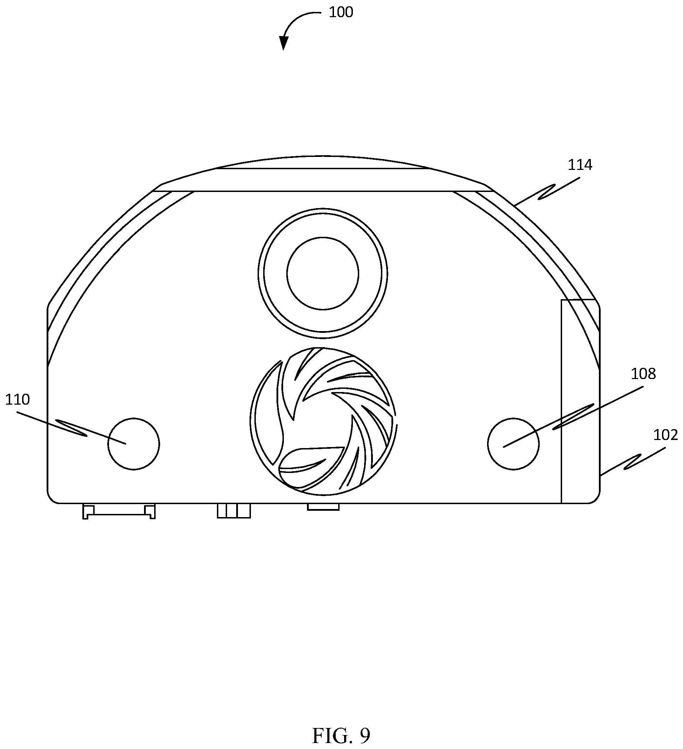

FIG. 9 is a top view of the apparatus 100, in accordance with some embodiments.

FIG. 10 is a side view of the apparatus 100 mounted on the at least one agricultural equipment 1002, in accordance with some embodiments.

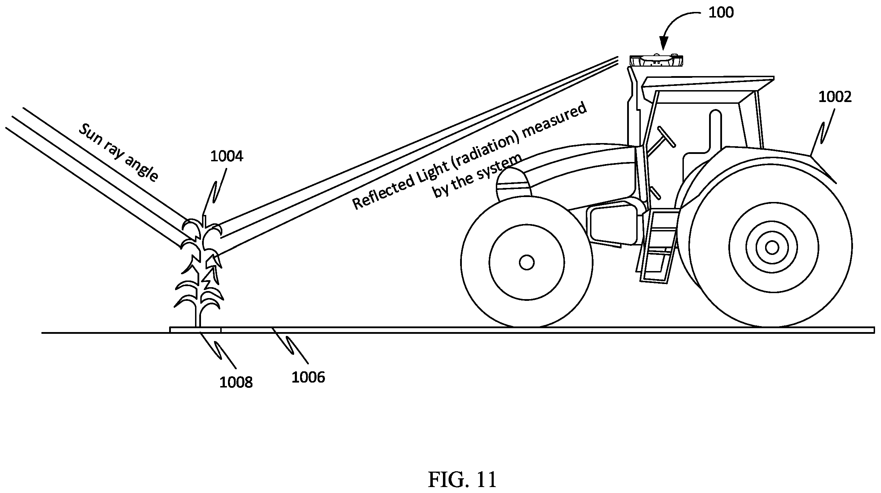

FIG. 11 is a side view of the apparatus 100 mounted on the at least one agricultural equipment 1002, in accordance with some embodiments.

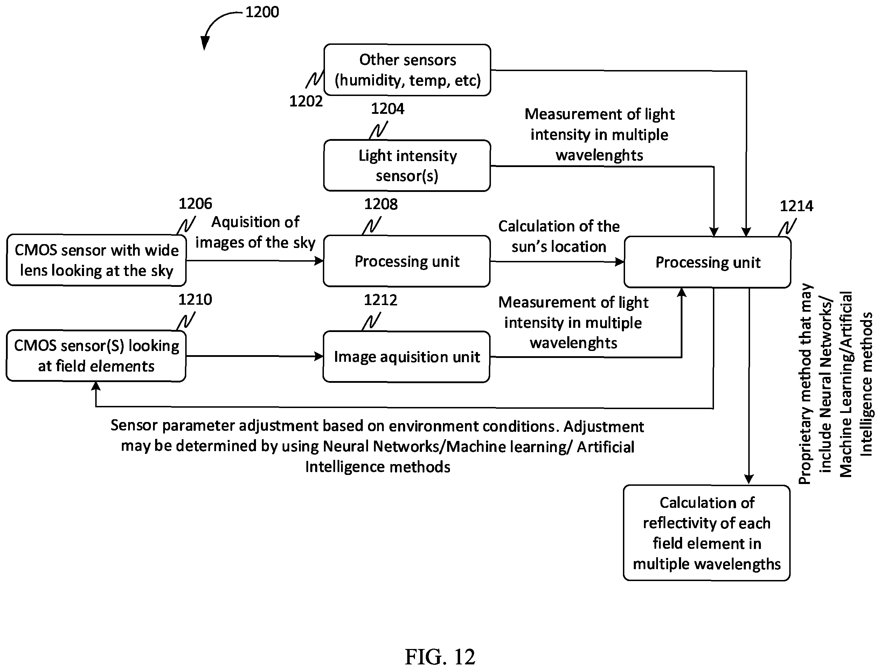

FIG. 12 is a block diagram of a system 1200 for facilitating managing cultivation of crops based on monitoring the crops, in accordance with some embodiments. Further, the system 1200 may include sensors 1202 configured for generating a first measurement of a humidity, a temperature, etc. Further, the system 1200 may include a light intensity sensor 1204 configured for generating a second measurement of light intensity in multiple wavelengths. Further, the system 1200 may include a CMOS sensor 1206 with wide lens and a processing unit 1208 communicatively coupled with the CMOS sensor 1206. Further, the CMOS sensor 1206 looks at the sky. Further, the CMOS sensor 1206 may be configured for acquiring images of the sky, and the processing unit 1208 may be configured for calculating a sun's location in the sky based on the images of the sky. Further, the system 1200 may include a CMOS sensor 1210 looking at field elements and an image acquisition unit 1212 communicatively coupled with the CMOS sensor 1210. Further, the CMOS sensor 1210 may be configured for acquiring images of the field elements. Further, the image acquisition unit 1212 may be configured for generating a third measurement of light intensity in multiple wavelengths based on the images of the field elements. Further, the system 1200 may include a processing unit 1214 communicatively coupled with the sensors 1202, the light intensity sensor 1204, the processing unit 1208, and the image acquisition unit 1212. Further, the processing unit 1214 may be configured for calculating the reflectivity of each field element in multiple wavelengths using proprietary methods that may include Neural Networks/Machine Learning/ Artificial Intelligence methods.

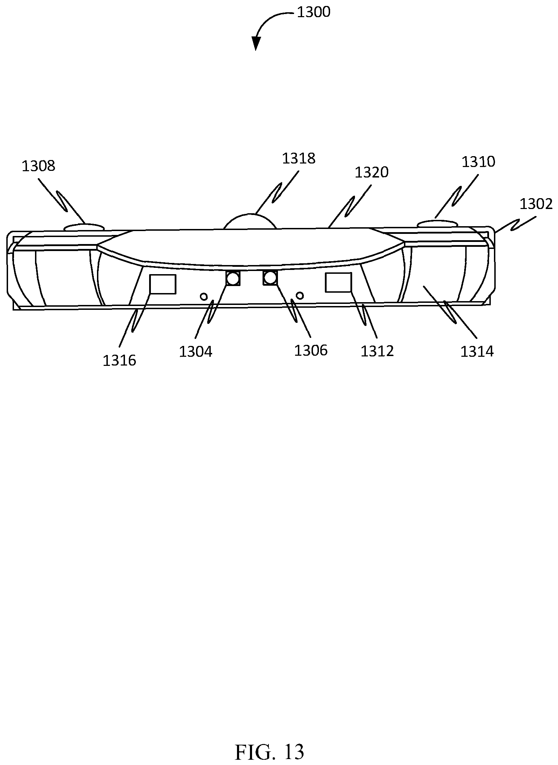

FIG. 13 is a front view of an apparatus 1300 for facilitating managing cultivation of crops based on monitoring the crops, in accordance with some embodiments. Further, the apparatus 1300 may be configured to be mounted on at least one agricultural equipment. Further, the at least one agricultural equipment performs at least one agricultural operation on the crops. Further, the apparatus 1300 may include an apparatus body 1302, a plurality of cameras 1304-1306, a plurality of light sensors 1308-1310, a plurality of first cameras 1318, a processing unit 1316, and a communication interface 1312.

Further, the plurality of cameras 1304-1306 may be disposed on a front side 1314 of the apparatus body 1302. Further, the plurality of cameras 1304-1306 may be configured for generating at least one measurement of at least one of a crop of a plurality of crops and a field portion of a field associated with the crop based on detecting at least one first light characteristic of a light associated with at least one of the crop and the field portion.

Further, the plurality of light sensors 1308-1310 may be disposed on the apparatus body 1302. Further, the plurality of light sensors 1308-1310 may be configured for generating at least one environment measurement of an environment of the apparatus 1300 based on detecting at least one second light characteristic of an environment light associated with the environment.

Further, the plurality of first cameras 1318 may be disposed on a top side 1320 of the apparatus body 1302. Further, the plurality of first cameras 1318 may be configured for generating at least one sky measurement of the sky based on detecting at least one of a sky characteristic of the sky and a sun characteristic of the sun in the sky.

Further, the processing unit 1316 may be disposed in the apparatus body 1302.

Further, the processing unit 1316 may be communicatively coupled with the plurality of light sensors 1308-1310 and the plurality of first cameras 1318. Further, the processing unit 1316 may be configured for analyzing the at least one environment measurement and the at least one sky measurement. Further, the processing unit 1316 may be configured for determining at least one factor affecting the at least one measurement of at least one of the crop and the field portion based on the analyzing of the at least one environment measurement and the at least one sky measurement. Further, the processing unit 1316 may be configured for generating at least one calibrating factor for the plurality of cameras 1304-1306 based on the determining of the at least one factor. Further, the at least one calibrating factor facilitates compensating the affecting of the at least one factor in the at least one measurement. Further, the plurality of cameras 1304-1306 may be communicatively coupled with the processing unit 1316. Further, the plurality of cameras 1304-1306 may be configured for calibrating at least one camera parameter of the plurality of cameras 1304-1306 based on the at least one calibrating factor. Further, the generating of the at least one measurement of at least one of the crop and the field portion associated with the crop may be further based on the calibrating. Further, the processing unit 1316 may be configured for analyzing the at least one measurement of at least one of the crop and the field portion associated with the crop. Further, the processing unit 1316 may be configured for generating a status of the crop based on the analyzing of the at least one measurement.

Further, the communication interface 1312 may be communicatively coupled with the processing unit 1316. Further, the communication interface 1312 may be configured for transmitting the status of the crop to at least one device.

In further embodiments, the apparatus 1300 may include at least one environmental sensor disposed on the apparatus body 1302. Further, the at least one environmental sensor may be configured for generating at least one first environmental measurement based on detecting at least one environmental condition of the environment. Further, the processing unit 1316 may be communicatively coupled with the at least one environmental sensor. Further, the processing unit 1316 may be configured for analyzing the at least one first environmental measurement. Further, the determining of the at least one factor may be further based on the analyzing of the at least one first environmental measurement.

Further, in some embodiments, the analyzing of the at least one environment measurement may include analyzing the at least one environment measurement using at least one machine learning model. Further, the determining of the at least one factor may be further based on the analyzing of the at least one environment measurement using the at least one machine learning model.

Further, in some embodiments, the plurality of cameras 1304-1306 may include a plurality of bandpass filters. Further, the detecting of the at least one first light characteristic of the light associated with at least one of the crop and the field portion may include detecting the at least one first light characteristic of the light associated with at least one of the crop and the field portion in at least one light wavelength band based on the plurality of bandpass filters. Further, the generating of the at least one measurement may be further based on the detecting of the at least one first light characteristic of the light associated with at least one of the crop and the field portion in the at least one light wavelength band based on the plurality of bandpass filters.

Further, in an embodiment, the detecting of the at least one second light characteristic of the environment light may include detecting the at least one second light characteristic of the environment light in a plurality of light wavelength bands. Further, the generating of the at least one environment measurement of the environment may be further based on detecting the at least one second light characteristic of the environment light in a plurality of light wavelength bands. Further, a plurality of wavelength center frequencies of the plurality of light wavelength bands corresponds to a plurality of bandpass center frequencies of the plurality of bandpass filters.

In further embodiments, the apparatus 1300 may include at least one sensor disposed on the apparatus body 1302. Further, the at least one sensor may be configured for generating at least one sensor data based on detecting at least one characteristic of the apparatus 1300. Further, the processing unit 1316 may be communicatively coupled with the at least one sensor. Further, the processing unit 1316 may be further configured for analyzing the at least one sensor data. Further, the determining of the at least one factor may be further based on the analyzing of the at least one sensor data.

Further, in some embodiments, the processing unit 1316 may be configured for analyzing the status of the crop. Further, the processing unit 1316 may be configured for calculating at least one index related to at least one of the crop and the field portion based on the analyzing of the status of the crop. Further, the processing unit 1316 may be configured for generating a dosage of at least one substance for the crop corresponding to a time based on the at least one index. Further, the communication interface 1312 may be further configured for transmitting the dosage of the at least one substance to the at least one device.

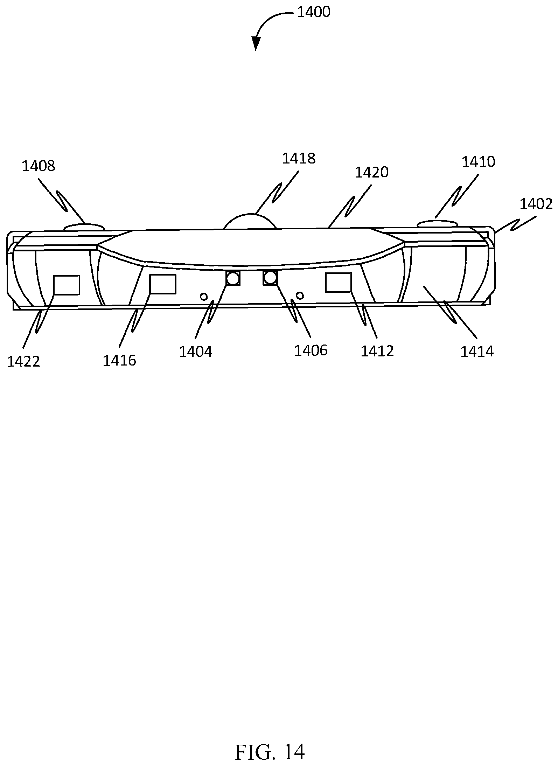

FIG. 14 is a front view of an apparatus 1400 for facilitating managing cultivation of crops based on monitoring the crops, in accordance with some embodiments. Further, the apparatus 1400 may be configured to be mounted on at least one agricultural equipment. Further, the at least one agricultural equipment performs at least one agricultural operation on the crops. Further, the apparatus 1400 may include an apparatus body 1402, a plurality of cameras 1404-1406, a plurality of light sensors 1408-1410, a plurality of first cameras 1418, at least one environmental sensor 1422, a processing unit 1416, and a communication interface 1412.

Further, the plurality of cameras 1404-1406 may be disposed on a front side 1414 of the apparatus body 1402. Further, the plurality of cameras 1404-1406 may be configured for generating at least one measurement of at least one of a crop of a plurality of crops and a field portion of a field associated with the crop based on detecting at least one first light characteristic of a light associated with at least one of the crop and the field portion.

Further, the plurality of light sensors 1408-1410 may be disposed on the apparatus body 1402. Further, the plurality of light sensors 1408-1410 may be configured for generating at least one environment measurement of an environment of the apparatus 1400 based on detecting at least one second light characteristic of an environment light associated with the environment.

Further, the plurality of first cameras 1418 may be disposed on a top side 1420 of the apparatus body 1402. Further, the plurality of first cameras 1418 may be configured for generating at least one sky measurement of the sky based on detecting at least one of a sky characteristic of the sky and a sun characteristic of the sun in the sky.

Further, the at least one environmental sensor 1422 may be disposed on the apparatus body 1402. Further, the at least one environmental sensor 1422 may be configured for generating at least one first environmental measurement based on detecting at least one environmental condition of the environment.

Further, the processing unit 1416 may be disposed in the apparatus body 1402. Further, the processing unit 1416 may be communicatively coupled with the plurality of light sensors 1408-1410, the plurality of first cameras 1418, and the at least one environmental sensor 1422. Further, the processing unit 1416 may be configured for analyzing the at least one environment measurement, the at least one sky measurement, and the at least one first environmental measurement. Further, the processing unit 1416 may be configured for determining at least one factor affecting the at least one measurement of at least one of the crop and the field portion based on the analyzing of the at least one environment measurement, the at least one sky measurement, and the at least one first environmental measurement. Further, the processing unit 1416 may be configured for generating at least one calibrating factor for the plurality of cameras 1404-1406 based on the determining of the at least one factor. Further, the at least one calibrating factor facilitates compensating the affecting of the at least one factor in the at least one measurement. Further, the plurality of cameras 1404-1406 may be communicatively coupled with the processing unit 1416. Further, the plurality of cameras 1404-1406 may be configured for calibrating at least one camera parameter of the plurality of cameras 1404-1406 based on the at least one calibrating factor. Further, the generating of the at least one measurement of at least one of the crop and the field portion associated with the crop may be further based on the calibrating. Further, the processing unit 1416 may be configured for analyzing the at least one measurement of at least one of the crop and the field portion associated with the crop. Further, the processing unit 1416 may be configured for generating a status of the crop based on the analyzing of the at least one measurement.

Further, the communication interface 1412 may be communicatively coupled with the processing unit 1416. Further, the communication interface 1412 may be configured for transmitting the status of the crop to at least one device.

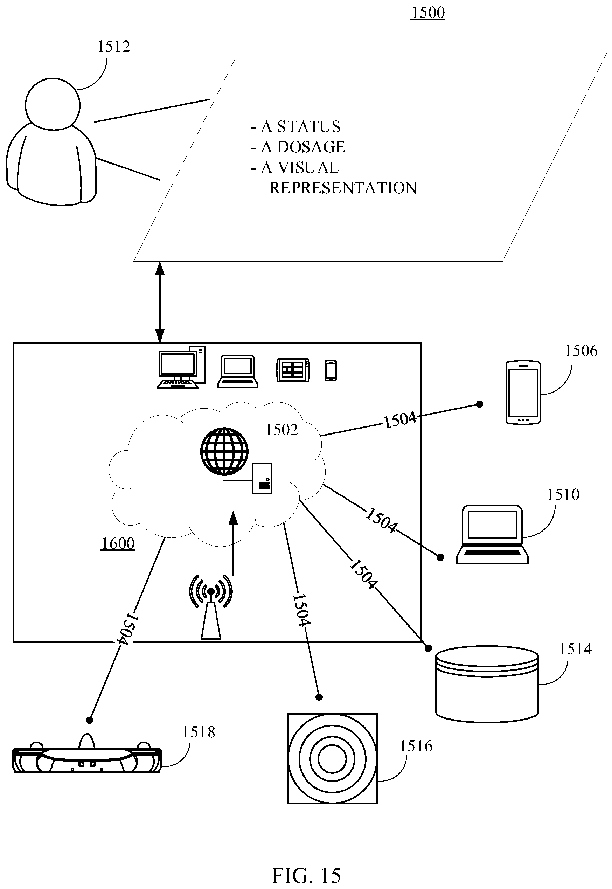

FIG. 15 is an illustration of an online platform 1500 consistent with various embodiments of the present disclosure. By way of non-limiting example, the online platform 1500 to facilitate managing cultivation of crops based on monitoring the crops may be hosted on a centralized server 1502, such as, for example, a cloud computing service. The centralized server 1502 may communicate with other network entities, such as, for example, a mobile device 1506 (such as a smartphone, a laptop, a tablet computer, etc.), other electronic devices 1510 (such as desktop computers, server computers, etc.), databases 1514, sensors 1516, and an apparatus 1518 (such as the apparatus 100, the apparatus 1300, and the apparatus 1400) over a communication network 1504, such as, but not limited to, the Internet. Further, users of the online platform 1500 may include relevant parties such as, but not limited to, end-users, administrators, service providers, service consumers, and so on. Accordingly, in some instances, electronic devices operated by the one or more relevant parties may be in communication with the platform.

A user 1512, such as the one or more relevant parties, may access online platform 1500 through a web based software application or browser. The web based software application may be embodied as, for example, but not be limited to, a website, a web application, a desktop application, and a mobile application compatible with a computing device 1600.

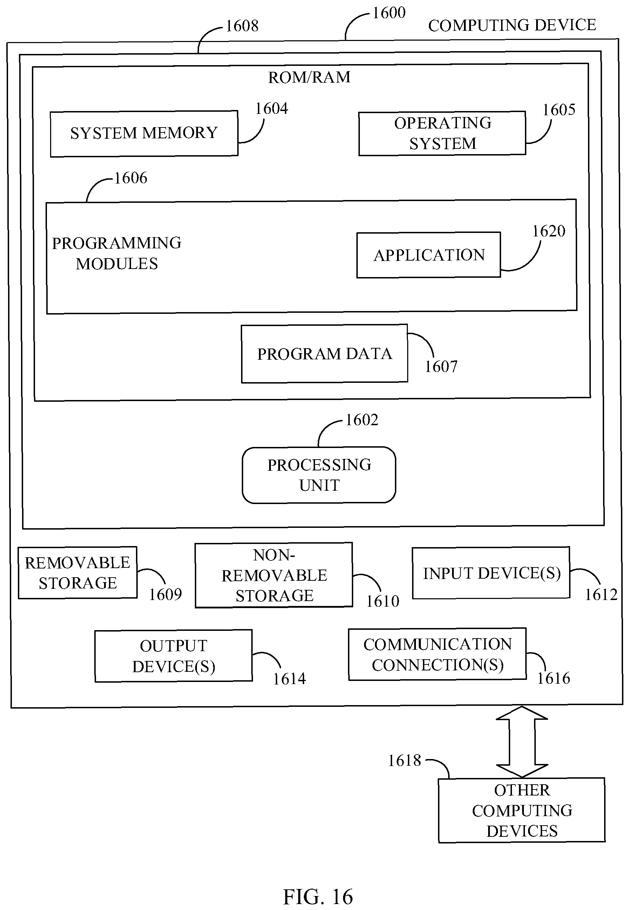

With reference to FIG. 16, a system consistent with an embodiment of the disclosure may include a computing device or cloud service, such as computing device 1600. In a basic configuration, computing device 1600 may include at least one processing unit 1602 and a system memory 1604. Depending on the configuration and type of computing device, system memory 1604 may comprise, but is not limited to, volatile (e.g., random-access memory (RAM)), non-volatile (e.g., read-only memory (ROM)), flash memory, or any combination. System memory 1604 may include operating system 1605, one or more programming modules 1606, and may include a program data 1607. Operating system 1605, for example, may be suitable for controlling computing device 1600's operation. In one embodiment, programming modules 1606 may include image-processing module, machine learning module. Furthermore, embodiments of the disclosure may be practiced in conjunction with a graphics library, other operating systems, or any other application program and is not limited to any particular application or system. This basic configuration is illustrated in FIG. 16 by those components within a dashed line 1608.

Computing device 1600 may have additional features or functionality. For example, computing device 1600 may also include additional data storage devices (removable and/or non-removable) such as, for example, magnetic disks, optical disks, or tape. Such additional storage is illustrated in FIG. 16 by a removable storage 1609 and a non-removable storage 1610. Computer storage media may include volatile and non-volatile, removable and non removable media implemented in any method or technology for storage of information, such as computer-readable instructions, data structures, program modules, or other data. System memory 1604, removable storage 1609, and non-removable storage 1610 are all computer storage media examples (i.e., memory storage.) Computer storage media may include, but is not limited to, RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other medium which can be used to store information and which can be accessed by computing device 1600. Any such computer storage media may be part of device 1600. Computing device 1600 may also have input device(s) 1612 such as a keyboard, a mouse, a pen, a sound input device, a touch input device, a location sensor, a camera, a biometric sensor, etc. Output device(s) 1614 such as a display, speakers, a printer, etc. may also be included. The aforementioned devices are examples and others may be used.

Computing device 1600 may also contain a communication connection 1616 that may allow device 1600 to communicate with other computing devices 1618, such as over a network in a distributed computing environment, for example, an intranet or the Internet. Communication connection 1616 is one example of communication media. Communication media may typically be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media. The term computer readable media as used herein may include both storage media and communication media.

As stated above, a number of program modules and data files may be stored in system memory 1604, including operating system 1605. While executing on processing unit 1602, programming modules 1606 (e.g., application 1620 such as a media player) may perform processes including, for example, one or more stages of methods, algorithms, systems, applications, servers, databases as described above. The aforementioned process is an example, and processing unit 1602 may perform other processes. Other programming modules that may be used in accordance with embodiments of the present disclosure may include machine learning applications.

Generally, consistent with embodiments of the disclosure, program modules may include routines, programs, components, data structures, and other types of structures that may perform particular tasks or that may implement particular abstract data types. Moreover, embodiments of the disclosure may be practiced with other computer system configurations, including hand-held devices, general purpose graphics processor-based systems, multiprocessor systems, microprocessor-based or programmable consumer electronics, application specific integrated circuit-based electronics, minicomputers, mainframe computers, and the like. Embodiments of the disclosure may also be practiced in distributed computing environments where tasks are performed by remote processing devices that are linked through a communications network. In a distributed computing environment, program modules may be located in both local and remote memory storage devices.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. Embodiments of the disclosure may also be practiced using other technologies capable of performing logical operations such as, for example, AND, OR, and NOT, including but not limited to mechanical, optical, fluidic, and quantum technologies. In addition, embodiments of the disclosure may be practiced within a general-purpose computer or in any other circuits or systems.

Embodiments of the disclosure, for example, may be implemented as a computer process (method), a computing system, or as an article of manufacture, such as a computer program product or computer readable media. The computer program product may be a computer storage media readable by a computer system and encoding a computer program of instructions for executing a computer process. The computer program product may also be a propagated signal on a carrier readable by a computing system and encoding a computer program of instructions for executing a computer process. Accordingly, the present disclosure may be embodied in hardware and/or in software (including firmware, resident software, micro-code, etc.). In other words, embodiments of the present disclosure may take the form of a computer program product on a computer-usable or computer-readable storage medium having computer-usable or computer-readable program code embodied in the medium for use by or in connection with an instruction execution system. A computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific computer-readable medium examples (a non-exhaustive list), the computer-readable medium may include the following: an electrical connection having one or more wires, a portable computer diskette, a random-access memory (RAM), a read-only memory (ROM), an erasable programmable read-only memory (EPROM or Flash memory), an optical fiber, and a portable compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

Embodiments of the present disclosure, for example, are described above with reference to block diagrams and/or operational illustrations of methods, systems, and computer program products according to embodiments of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality /acts involved.

While certain embodiments of the disclosure have been described, other embodiments may exist. Furthermore, although embodiments of the present disclosure have been described as being associated with data stored in memory and other storage mediums, data can also be stored on or read from other types of computer-readable media, such as secondary storage devices, like hard disks, solid state storage (e.g., USB drive), or a CD-ROM, a carrier wave from the Internet, or other forms of RAM or ROM. Further, the disclosed methods' stages may be modified in any manner, including by reordering stages and/or inserting or deleting stages, without departing from the disclosure.

Although the present disclosure has been explained in relation to its preferred embodiment, it is to be understood that many other possible modifications and variations can be made without departing from the spirit and scope of the disclosure.

In particular, the invention relates to the following aspects:
1. An apparatus for facilitating managing cultivation of crops based on monitoring the crops, wherein the apparatus is configured to be mounted on at least one agricultural equipment, wherein the at least one agricultural equipment performs at least one agricultural operation on the crops, wherein the apparatus comprises:
   an apparatus body;
   a plurality of cameras disposed on a front side of the apparatus body, wherein the plurality of cameras is configured for generating at least one measurement of at least one of a crop of a plurality of crops and a field portion of a field associated with the crop based on detecting at least one first light characteristic of a light associated with at least one of the crop and the field portion;
   a plurality of light sensors disposed on the apparatus body, wherein the plurality of light sensors is configured for generating at least one environment measurement of an environment of the apparatus based on detecting at least one second light characteristic of an environment light associated with the environment;
   a processing unit disposed in the apparatus body, wherein the processing unit is communicatively coupled with the plurality of light sensors, wherein the processing unit is configured for:
      analyzing the at least one environment measurement;
      determining at least one factor affecting the at least one measurement of at least one of the crop and the field portion based on the analyzing of the at least one environment measurement;
      generating at least one calibrating factor for the plurality of cameras based on the determining of the at least one factor, wherein the at least one calibrating factor facilitates compensating the affecting of the at least one factor in the at least one measurement, wherein the plurality of cameras is communicatively coupled with the processing unit, wherein the plurality of cameras is configured for calibrating at least one camera parameter of the plurality of cameras based on the at least one calibrating factor, wherein the generating of the at least one measurement of at least one of the crop and the field portion associated with the crop is further based on the calibrating;
      analyzing the at least one measurement of at least one of the crop and the field portion associated with the crop; and
      generating a status of the crop based on the analyzing of the at least one measurement; and
      a communication interface communicatively coupled with the processing unit, wherein the communication interface is configured for transmitting the status of the crop to at least one device.
2. The apparatus of aspect 1 further comprising a plurality of first cameras disposed on a top side of the apparatus body, wherein the plurality of first cameras is configured for generating at least one sky measurement of the sky based on detecting at least one of a sky characteristic of the sky and a sun characteristic of the sun in the sky, wherein the processing unit is communicatively coupled with the plurality of first cameras, wherein the processing unit is further configured for analyzing the at least one sky measurement, wherein the determining of the at least one factor is further based on the analyzing of the at least one sky measurement.
3. The apparatus of aspect 1 further comprising at least one environmental sensor disposed on the apparatus body, wherein the at least one environmental sensor is configured for generating at least one first environmental measurement based on detecting at least one environmental condition of the environment, wherein the processing unit is communicatively coupled with the at least one environmental sensor, wherein the processing unit is configured for analyzing the at least one first environmental measurement, wherein the determining of the at least one factor is further based on the analyzing of the at least one first environmental measurement.
4. The apparatus of aspect 1, wherein the analyzing of the at least one environment measurement comprises analyzing the at least one environment measurement using at least one machine learning model, wherein the determining of the at least one factor is further based on the analyzing of the at least one environment measurement using the at least one machine learning model.
5. The apparatus of aspect 1, wherein the plurality of cameras comprises a plurality of bandpass filters, wherein the detecting of the at least one first light characteristic of the light associated with at least one of the crop and the field portion comprises detecting the at least one first light characteristic of the light associated with at least one of the crop and the field portion in at least one light wavelength band based on the plurality of bandpass filters, wherein the generating of the at least one measurement is further based on the detecting of the at least one first light characteristic of the light associated with at least one of the crop and the field portion in the at least one light wavelength band based on the plurality of bandpass filters.
6. The apparatus of aspect 5, wherein the detecting of the at least one second light characteristic of the environment light comprises detecting the at least one second light characteristic of the environment light in a plurality of light wavelength bands, wherein the generating of the at least one environment measurement of the environment is further based on detecting the at least one second light characteristic of the environment light in a plurality of light wavelength bands, wherein a plurality of wavelength center frequencies of the plurality of light wavelength bands corresponds to a plurality of bandpass center frequencies of the plurality of bandpass filters.
7. The apparatus of aspect 1 further comprising at least one sensor disposed on the apparatus body, wherein the at least one sensor is configured for generating at least one sensor data based on detecting at least one characteristic of the apparatus, wherein the processing unit is communicatively coupled with the at least one sensor, wherein the processing unit is further configured for analyzing the at least one sensor data, wherein the determining of the at least one factor is further based on the analyzing of the at least one sensor data.
8. The apparatus of aspect 1, wherein the processing unit is further configured for:
   analyzing the status of the crop;
   calculating at least one index related to at least one of the crop and the field portion based on the analyzing of the status of the crop; and
   generating a dosage of at least one substance for the crop corresponding to a time based on the at least one index, wherein the communication interface is further configured for transmitting the dosage of the at least one substance to the at least one device.
9. The apparatus of aspect 8 further comprising at least one actuator disposed in the apparatus body, wherein the at least one actuator is configured to be operationally coupled with a substance dispensing mechanism of the at least one agricultural equipment, wherein the at least one actuator is communicatively coupled with the processing unit, wherein the processing unit is further configured for generating at least one command for dispensing the dosage of the at least one substance at the time based on the generating of the dosage, wherein the at least one actuator is configured for actuating the substance dispensing mechanism based on the at least one command, wherein the substance dispensing mechanism dispenses the dosage of the at least one substance at the time based on the actuating.
10. The apparatus of aspect 1, wherein the processing unit is further configured for:
   analyzing the status of the crop:
   determining at least one characteristic of at least one of the crop and the field portion based on the analyzing of the status; and
   generating a visual representation of the at least one characteristic for at least one of the crop and the field portion based on the determining of the at least one characteristic, wherein the communication interface is further configured for transmitting the visual representation to the at least one device.
11. The apparatus of aspect 1, wherein the processing unit is further configured for:
   analyzing the status of the crop:
   determining at least one area of interest in the field based on the analyzing of the status of the crop; and
   generating a driving trajectory of the at least one agricultural equipment in the field based on the determining of the at least one area of interest, wherein the communication interface is further configured for transmitting the driving trajectory to the at least one device.
12. The apparatus of aspect 11 further comprising at least one vehicle actuator disposed in the apparatus body, wherein the at least one vehicle actuator is configured to be operationally coupled with a driving mechanism of the at least one agricultural equipment, wherein the at least one vehicle actuator is communicatively coupled with the processing unit, wherein the processing unit is further configured for generating at least one driving command based on the driving trajectory, wherein the at least one vehicle actuator is configured for actuating the driving mechanism based on the at least one driving command, wherein the driving mechanism drives the at least one agricultural equipment in the driving trajectory based on the actuating.
13. An apparatus for facilitating managing cultivation of crops based on monitoring the crops, wherein the apparatus is configured to be mounted on at least one agricultural equipment, wherein the at least one agricultural equipment performs at least one agricultural operation on the crops, wherein the apparatus comprises:
   an apparatus body;
   a plurality of cameras disposed on a front side of the apparatus body, wherein the plurality of cameras is configured for generating at least one measurement of at least one of a crop of a plurality of crops and a field portion of a field associated with the crop based on detecting at least one first light characteristic of a light associated with at least one of the crop and the field portion;
   a plurality of light sensors disposed on the apparatus body, wherein the plurality of light sensors is configured for generating at least one environment measurement of an environment of the apparatus based on detecting at least one second light characteristic of an environment light associated with the environment;
   a plurality of first cameras disposed on a top side of the apparatus body, wherein the plurality of first cameras is configured for generating at least one sky measurement of the sky based on detecting at least one of a sky characteristic of the sky and a sun characteristic of the sun in the sky;
   a processing unit disposed in the apparatus body, wherein the processing unit is communicatively coupled with the plurality of light sensors and the plurality of first cameras, wherein the processing unit is configured for:
      analyzing the at least one environment measurement and the at least one sky measurement;
      determining at least one factor affecting the at least one measurement of at least one of the crop and the field portion based on the analyzing of the at least one environment measurement and the at least one sky measurement;
      generating at least one calibrating factor for the plurality of cameras based on the determining of the at least one factor, wherein the at least one calibrating factor facilitates compensating the affecting of the at least one factor in the at least one measurement, wherein the plurality of cameras is communicatively coupled with the processing unit, wherein the plurality of cameras is configured for calibrating at least one camera parameter of the plurality of cameras based on the at least one calibrating factor, wherein the generating of the at least one measurement of at least one of the crop and the field portion associated with the crop is further based on the calibrating;
      analyzing the at least one measurement of at least one of the crop and the field portion associated with the crop; and
      generating a status of the crop based on the analyzing of the at least one measurement; and
      a communication interface communicatively coupled with the processing unit, wherein the communication interface is configured for transmitting the status of the crop to at least one device.
14. The apparatus of aspect 13 further comprising at least one environmental sensor disposed on the apparatus body, wherein the at least one environmental sensor is configured for generating at least one first environmental measurement based on detecting at least one environmental condition of the environment, wherein the processing unit is communicatively coupled with the at least one environmental sensor, wherein the processing unit is configured for analyzing the at least one first environmental measurement, wherein the determining of the at least one factor is further based on the analyzing of the at least one first environmental measurement.
15. The apparatus of aspect 13, wherein the analyzing of the at least one environment measurement comprises analyzing the at least one environment measurement using at least one machine learning model, wherein the determining of the at least one factor is further based on the analyzing of the at least one environment measurement using the at least one machine learning model.
16. The apparatus of aspect 13, wherein the plurality of cameras comprises a plurality of bandpass filters, wherein the detecting of the at least one first light characteristic of the light associated with at least one of the crop and the field portion comprises detecting the at least one first light characteristic of the light associated with at least one of the crop and the field portion in at least one light wavelength band based on the plurality of bandpass filters, wherein the generating of the at least one measurement is further based on the detecting of the at least one first light characteristic of the light associated with at least one of the crop and the field portion in the at least one light wavelength band based on the plurality of bandpass filters.
17. The apparatus of aspect 16, wherein the detecting of the at least one second light characteristic of the environment light comprises detecting the at least one second light characteristic of the environment light in a plurality of light wavelength bands, wherein the generating of the at least one environment measurement of the environment is further based on detecting the at least one second light characteristic of the environment light in a plurality of light wavelength bands, wherein a plurality of wavelength center frequencies of the plurality of light wavelength bands corresponds to a plurality of bandpass center frequencies of the plurality of bandpass filters.
18. The apparatus of aspect 13 further comprising at least one sensor disposed on the apparatus body, wherein the at least one sensor is configured for generating at least one sensor data based on detecting at least one characteristic of the apparatus, wherein the processing unit is communicatively coupled with the at least one sensor, wherein the processing unit is further configured for analyzing the at least one sensor data, wherein the determining of the at least one factor is further based on the analyzing of the at least one sensor data.
19. The apparatus of aspect 13, wherein the processing unit is further configured for:
   analyzing the status of the crop;
   calculating at least one index related to at least one of the crop and the field portion based on the analyzing of the status of the crop; and
   generating a dosage of at least one substance for the crop corresponding to a time based on the at least one index, wherein the communication interface is further configured for transmitting the dosage of the at least one substance to the at least one device.
20. An apparatus for facilitating managing cultivation of crops based on monitoring the crops, wherein the apparatus is configured to be mounted on at least one agricultural equipment, wherein the at least one agricultural equipment performs at least one agricultural operation on the crops, wherein the apparatus comprises:
   an apparatus body;
   a plurality of cameras disposed on a front side of the apparatus body, wherein the plurality of cameras is configured for generating at least one measurement of at least one of a crop of a plurality of crops and a field portion of a field associated with the crop based on detecting at least one first light characteristic of a light associated with at least one of the crop and the field portion;
   a plurality of light sensors disposed on the apparatus body, wherein the plurality of light sensors is configured for generating at least one environment measurement of an environment of the apparatus based on detecting at least one second light characteristic of an environment light associated with the environment;
   a plurality of first cameras disposed on a top side of the apparatus body, wherein the plurality of first cameras is configured for generating at least one sky measurement of the sky based on detecting at least one of a sky characteristic of the sky and a sun characteristic of the sun in the sky;
   at least one environmental sensor disposed on the apparatus body, wherein the at least one environmental sensor is configured for generating at least one first environmental measurement based on detecting at least one environmental condition of the environment;
   a processing unit disposed in the apparatus body, wherein the processing unit is communicatively coupled with the plurality of light sensors, the plurality of first cameras, and the at least one environmental sensor, wherein the processing unit is configured for:
      analyzing the at least one environment measurement, the at least one sky measurement, and the at least one first environmental measurement;
      determining at least one factor affecting the at least one measurement of at least one of the crop and the field portion based on the analyzing of the at least one environment measurement, the at least one sky measurement, and the at least one first environmental measurement;
      generating at least one calibrating factor for the plurality of cameras based on the determining of the at least one factor, wherein the at least one calibrating factor facilitates compensating the affecting of the at least one factor in the at least one measurement, wherein the plurality of cameras is communicatively coupled with the processing unit, wherein the plurality of cameras is configured for calibrating at least one camera parameter of the plurality of cameras based on the at least one calibrating factor, wherein the generating of the at least one measurement of at least one of the crop and the field portion associated with the crop is further based on the calibrating;
      analyzing the at least one measurement of at least one of the crop and the field portion associated with the crop; and
      generating a status of the crop based on the analyzing of the at least one measurement; and
      a communication interface communicatively coupled with the processing unit, wherein the communication interface is configured for transmitting the status of the crop to at least one device.

## Claims

1. An apparatus for detection of vegetation, the apparatus comprising:
An apparatus body configured for installation on a cab of an agricultural vehicle, the apparatus body includes:
a multispectral imaging sensor configured to generate a measurement of a field portion and at least one crop in the field portion;
a light sensor configured to generate a light measurement of ambient light in an environment proximate the field portion and the least one crop;
a processing unit in communication with each of the multispectral imaging sensor and the light sensor, the processing unit is configured to:
analyze the light measurement;
determine at least one factor affecting the measurement of the field portion based on analysis of the light measurement;
calibrating the multispectral imaging sensor with a calibrating factor based on the determined at least one factor, the calibrating factor configured to compensate for an effect of ambient light in the environment on the measurement of the field portion;
wherein generating the measurement of the field portion is based in part on the calibrating factor;
analyze the measurement of the field portion based in part on the calibrating factor; and
generate a status of at least one crop based on the analysis of the measurement of the field portion based in part on the calibrating factor.

2. The apparatus of claim 1, wherein the analyzing light measurement comprises analyzing the light measurement with at least one machine learning model, wherein the determining of the at least one factor is further based on the analyzing of the light measurement using the at least one machine learning model.

3. The apparatus of claim 1, wherein the multispectral imaging sensor includes a plurality of cameras having a plurality of bandpass filters;
wherein the plurality of cameras are configured to detect at least one first light characteristic of light associated with the at least one of the crop in at least one light wavelength band based on the plurality of bandpass filters; and
wherein generating the measurement of the field portion and the at least one crop based on the detecting of the at least one first light characteristic in the at least one light wavelength band based on the plurality of bandpass filters.

4. The apparatus of claim 3, wherein the light sensor is configured to detect at least one second light characteristic of the ambient light in the environment in a plurality of light wavelength bands; and
wherein generating the light measurement of ambient light is further based on detecting the at least one second light characteristic of the ambient light in the plurality of light wavelength bands.

5. The apparatus of claim 4, wherein a plurality of wavelength center frequencies of the plurality of light wavelength bands corresponds to a plurality of bandpass center frequencies of the plurality of bandpass filters.

6. The apparatus of claim 1 comprising:
a communication interface in communication with the processing unit and at least one device.

7. The apparatus of claim 6, wherein the processing unit is configured to:
analyzing the status of the at least one crop;
calculating at least one index related to the at least one crop based on the analyzing of the status of the at least one crop; and
generating a dosage of at least one substance for the at least one crop corresponding to a time based on the at least one index, wherein the communication interface is configured to transmit the dosage of the at least one substance to the at least one device.

8. The apparatus of claim 7, wherein the at least one device includes at least one actuator operationally coupled with a substance dispensing mechanism, the at least one actuator is in communication with the processing unit; and
wherein the at least one actuator is configured for actuating the substance dispensing mechanism based on the generated dosage at the time based on the at least one index.

9. A method for detection of vegetation, the method comprising:
generating a measurement of a field portion and at least one crop in the field portion based in part on a calibrating factor with a multispectral imaging sensor;
generating a light measurement of ambient light in an environment proximate the field portion and the at least one crop;
wherein generating the light measurement of ambient light is isolated from the at least one crop;
determining a status of the at least one crop from the light measurement of ambient light and the measurement of the field portion, determining includes:
analyzing the light measurement;
determining at least one factor affecting the measurement of the field portion based on analyzing of the light measurement;
calibrating the multispectral imaging sensor with the calibrating factor based on the determined at least one factor, the calibrating factor configured to compensate for an effect of ambient light in the environment on the measurement of the field portion;
analyzing the measurement of the field portion based in part on the calibrating factor; and
generating a status of at least one crop based on the analyzing of the measurement of the field portion based in part on the calibrating factor.

10. The method of claim 9, wherein the analyzing light measurement comprises analyzing the light measurement with at least one machine learning model, wherein the determining of the at least one factor is further based on the analyzing of the light measurement using the at least one machine learning model.

11. The method of claim 9, wherein the multispectral imaging sensor includes a plurality of cameras having a plurality of bandpass filters, wherein the plurality of cameras are configured to detect at least one first light characteristic of light associated with the at least one of the crop in at least one light wavelength band based on the plurality of bandpass filters; and
generating the measurement of the field portion and the at least one crop includes detecting the at least one first light characteristic in the at least one light wavelength band based on the plurality of bandpass filters.

12. The method of claim 9, wherein the light sensor is configured to detect at least one second light characteristic of the ambient light in the environment in a plurality of light wavelength bands; and
generating the light measurement of ambient light includes detecting the at least one second light characteristic of the ambient light in the plurality of light wavelength bands.

13. The method of claim 9, wherein determining the status of the at least one crop includes:
analyzing the status of the at least one crop;
calculating at least one index related to the at least one crop based on the analyzing of the status of the at least one crop; and
generating a dosage of at least one substance for the at least one crop corresponding to a time based on the at least one index.

14. The apparatus of claim 13 comprising actuating a substance dispensing mechanism based on the generated dosage at the time based on the at least one index.
